# EUROPEAN PATENT APPLICATION

(11) **EP 4 583 569 A1**
(43) Date of publication of application: **09.07.2025**
(21) Application number: 22960363.4
(22) Date of filing: 30.09.2022
(51) Int. Cl.: H04W 24/10

(54) **MEASUREMENT REPORTING METHOD AND DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); WANG, shukun, Dongguan, Guangdong 523860 (CN)
(74) Representative: Mewburn Ellis LLP
(86) International application number: PCT/CN2022/123456
(87) International publication number: WO 2024/065749

(57) **Abstract**

The present disclosure relates to a method for measurement reporting and a device. The method includes the following. A terminal device controls a measurement reporting behavior of the terminal device by using a parameter associated with a first condition, where the first condition is a preset condition met by the terminal device. In the present disclosure, control of the measurement reporting behavior of the terminal can be realized.

## Description

### TECHNICAL FIELD

This disclosure relates to the field of communication, in particular to a method for measurement reporting and a device.

### BACKGROUND

In order to ensure the service continuity of a terminal device as much as possible, a network device usually configures a measurement configuration for the terminal device. The terminal device performs cell measurement based on the measurement configuration, and reports a cell measurement result when a reporting condition is met. Based on the measurement reporting result from the terminal device, the network device can cause the terminal device to switch to another cell timely, thereby ensuring the service continuity.

### SUMMARY

Embodiments of the present disclosure provide a method for measurement reporting and a device, which can realize the control of a measurement reporting behavior of a terminal device.

Embodiments of the present disclosure provide a method for measurement reporting. The method for measurement reporting includes the following. A terminal device controls a measurement reporting behavior of the terminal device by using a parameter associated with a first condition, where the first condition is a preset condition met by the terminal device.

Embodiments of the present disclosure provide a method for measurement reporting management. The method for measurement reporting management includes the following. A network device sends one or more preset conditions and/or parameters associated with the one or more preset conditions to a terminal device.

Embodiments of the present disclosure provide a terminal device. The terminal device includes a first control module. The first control module is configured to control a measurement reporting behavior of the terminal device by using a parameter associated with a first condition, where the first condition is a preset condition met by the terminal device.

Embodiments of the present disclosure provide a network device. The network device includes a second sending module. The second sending module is configured to send one or more preset conditions and/or parameters associated with the one or more preset conditions.

Embodiments of the present disclosure provide a device. The device includes a processor, a memory, and a transceiver. The memory is configured to store a computer program. The processor is configured to invoke and execute the computer program stored in the memory and control the transceiver, to cause the device to perform the method described above.

Embodiments of the present disclosure provide a chip. The chip is configured to implement the method described above.

Specifically, the chip includes a processor. The processor is configured to invoke and execute a computer program stored in a memory, to cause a device equipped with the chip to perform the method described above.

Embodiments of the present disclosure provide a computer-readable storage medium. The computer-readable storage medium is configured to store a computer program which, when executed by a device, causes the device to perform the method described above.

Embodiments of the present disclosure provide a computer program product. The computer program product includes computer program instructions that are operable with a computer to perform the method described above.

Embodiments of the present disclosure provide a computer program. The computer program is operable with a computer to perform the method described above.

In embodiments of the present disclosure, the terminal device controls its measurement reporting behavior by using the parameter associated with the first condition, thereby realizing the control of the measurement reporting behavior of the terminal device. In this way, the number of times that the terminal device triggers measurement reporting is reduced, air interface reporting resources are saved, the risk of a connection failure of the terminal device due to untimely measurement reporting is reduced, and thus a user service experience is improved.

### BRIEF DESCRIPTION OF THE DRAWINGS

FIG. 1 exemplarily illustrates a communication system 100.
FIG. 2 is a schematic flowchart of a method for measurement reporting 200 according to an embodiment of the present disclosure.
FIG. 3 is a schematic flowchart of a method for measurement reporting management 300 according to an embodiment of the present disclosure.
FIG. 4 is a schematic block diagram of a terminal device 400 according to an embodiment of the present disclosure.
FIG. 5 is a schematic block diagram of a terminal device 500 according to an embodiment of the present disclosure.
FIG. 6 is a schematic block diagram of a network device 600 according to an embodiment of the present disclosure.
FIG. 7 is a schematic block diagram of a network device 700 according to an embodiment of the present disclosure.
FIG. 8 is a schematic structural diagram of a communication device 800 according to embodiments of the present disclosure.
FIG. 9 is a schematic structural diagram of a chip 900 according to embodiments of the present disclosure.

### DETAILED DESCRIPTION

The following will describe technical solutions of embodiments of the present disclosure with reference to accompanying drawings in embodiments of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, other communication systems, etc.

Generally speaking, a conventional communication system generally supports a limited number (quantity) of connections and therefore is easy to implement. However, with the development of communication technology, a mobile communication system will not only support conventional communication but also support, for example, device-to-device (D2D) communication, machine-to-machine (M2M) communication, machine type communication (MTC), vehicle-to-vehicle (V2V) communication, vehicle to everything (V2X) communication, etc. Embodiments of the present disclosure can also be applied to these communication systems.

In an implementation, the communication system in embodiments of the present disclosure may be applied to a carrier aggregation (CA) scenario, or may be applied to a dual connectivity (DC) scenario, or may be applied to a standalone (SA) network deployment scenario.

In an implementation, the communication system in embodiments of the present disclosure is applicable to an unlicensed spectrum, and an unlicensed spectrum may be regarded as a shared spectrum. Alternatively, the communication system in embodiments of the present disclosure is applicable to a licensed spectrum, and a licensed spectrum may be regarded as a non-shared spectrum.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, a wireless terminal device in smart home, etc.

By way of explanation rather than limitation, in embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a future evolved PLMN, a network device in an NTN, etc.

By way of explanation rather than limitation, in embodiments of the present disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the present disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, etc. These small cells are characterized by small coverage and low transmission power and are adapted to provide data transmission service with high-rate.

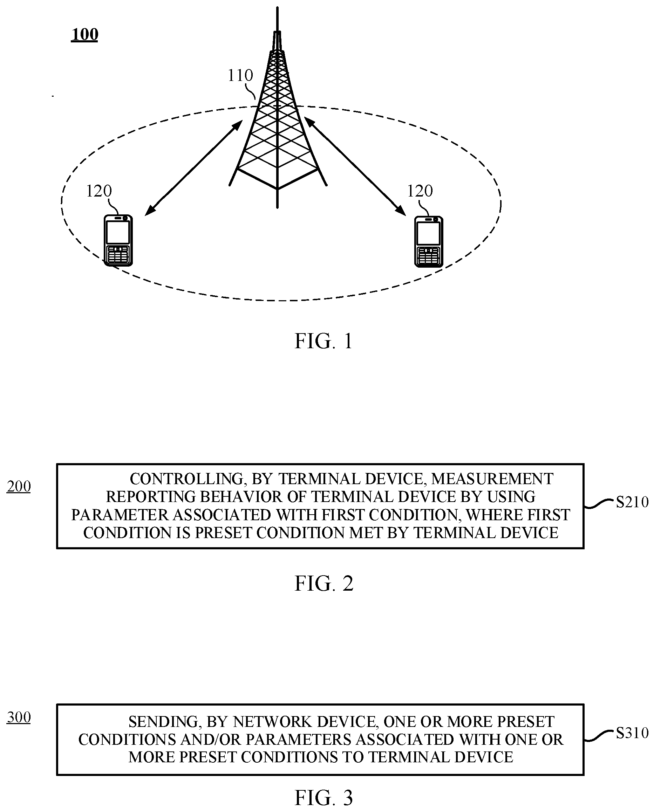

FIG. 1 exemplarily illustrates a communication system 100. The communication system 100 includes a network device 110 and two terminal devices 120. In an implementation, the communication system 100 can include multiple network devices 110, and there can be other quantities of terminal devices 120 in the coverage of each of the network devices 110, which is not limited in the present disclosure.

In an implementation, the communication system 100 can further include other network entities such as a mobility management entity (MME), an access and mobility management function (AMF), etc., which is not limited in the present disclosure.

The network device can further include an access network (AN) device and a core network (CN) device. That is, the wireless communication system further includes multiple CNs for communicating with the AN device. The AN device may be an evolutional node B (which can be referred to as "eNB" or "e-NodeB" for short), a macro base station, a micro base station (also referred to as "small base station"), a pico base station, an access point (AP), a transmission point (TP), a new generation Node B (gNodeB), etc., in the LTE system, the NR system, or an authorized auxiliary access long-term evolution (LAA-LTE) system.

It can be understood that, in embodiments of the present disclosure, a device with communication functions in a network/system can be referred to as "communication device". Taking the communication system illustrated in FIG. 1 as an example, the communication device may include a network device and a terminal device that have communication functions. The network device and the terminal device can be the devices in embodiments of the present disclosure, which will not be repeated herein. The communication device may further include other devices such as a network controller, an MME, or other network entities in the communication system, which is not limited in the present disclosure.

It can be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It can be understood that, "indication" referred to in embodiments of the present disclosure may be a direct indication, may be an indirect indication, or may mean that there is an association relationship. For example, *A* indicates *B* may mean that A directly indicates *B,* for instance, *B* can be obtained according to *A*; may mean that *A* indirectly indicates *B,* for instance, *A* indicates C, and *B* can be obtained according to C; or may mean that there is an association relationship between *A* and *B.*

In the elaboration of embodiments of the present disclosure, the term "correspondence" may mean that there is a direct or indirect correspondence between the two, may mean that there is an association between the two, may mean a relationship of indicating and indicated or configuring and configured, etc.

In order to better understand technical solutions of embodiments of the present disclosure, technical solutions related to the embodiments of the present disclosure will be elaborated below. The following related art as an optional scheme can be arbitrarily combined with the technical solutions of embodiments of the present disclosure, which shall all belong to the protection scope of embodiments of the present disclosure. Embodiments of the present disclosure include at least some of the following.

### 1. Measurement reporting mechanism

In order to ensure the service continuity of the terminal device as much as possible, the network device usually configures a measurement configuration for the terminal device. The terminal device performs cell measurement based on the measurement configuration, and reports a cell measurement result when a reporting condition is met. Based on the measurement reporting result from the terminal device, the network device can cause the terminal device to switch to another cell timely, thereby ensuring the service continuity.

Typically, the measurement configuration includes one or more measurement identities (IDs), and each measurement ID is associated with one measurement object (MO) and one set of measurement reporting configurations.

Each MO at least includes information related to a measurement frequency, and the information related to the measurement frequency is used for informing the terminal device of information such as a frequency-domain location of the MO, etc.

Each set of measurement reporting configurations at least includes information such as a manner of triggering measurement reporting (periodically triggered reporting or event triggered reporting), etc. The periodically triggered reporting means that the terminal device reports the measurement result at a certain period, while the event triggered reporting means that the terminal device can report the measurement result only when triggered by a specific event configured in the measurement reporting configuration. For the event triggered reporting, as stipulated in the standard, as long as a measurement result of at least one cell among cell measurement results measured at a frequency specified by an MO meets a measurement reporting event, the terminal device needs to trigger measurement reporting.

### 2. Unmanned aerial vehicle (UAV) measurement environment

Unlike a terminal device on the ground, a UAV device can receive services from the network device in the air. A wide field of view makes it easier for the UAV device to receive line-of-sight (LOS) propagation signals from multiple cells. This advantage cannot be experienced by the terminal device on the ground, because the terminal device on the ground is usually limited by the obstruction of buildings and street facilities on the ground, and cells that can provide the LOS propagation signals to the terminal device on the ground are very limited.

For the event triggered reporting, as stipulated in the standard, as long as the measurement result of at least one cell among the cell measurement results measured at the frequency specified by the MO meets the measurement reporting event, the terminal device needs to trigger measurement reporting. However, this mechanism is not good for the UAV terminal device, because the UAV terminal device has a wide field of view in the air, and the number of cells that can be measured by the UAV terminal device in the air will be significantly greater than the number of cells that can be measured by the terminal device on the ground. If a triggering condition of measurement reporting of the terminal device on the ground (as long as the measurement result of at least one cell among the cell measurement results measured at the frequency specified by the MO meets the measurement reporting event, the terminal device needs to trigger measurement reporting) is still used, a measurement reporting behavior of the UAV terminal device will be triggered frequently. In order to reduce the number of measurement reporting of the UAV terminal device, in related technologies, a cell quantity threshold *n* (*n* is a positive integer greater than or equal to 2) that meets the condition is introduced into the measurement reporting configuration. Only when measurement results of at least *n* cells among the cell measurement results measured at the frequency specified by the MO meet the measurement reporting event, the terminal device can trigger measurement reporting.

With the method described above, the number of measurement reporting of the UAV terminal device can be reduced, and the measurement reporting behavior of the UAV terminal device can be optimized. However, a measurement reporting rule of the UAV terminal device is much more stringent than a measurement reporting rule of the terminal device on the ground (for the UAV terminal device, the number of cells that meet the triggering condition of measurement reporting needs to be greater than or equal to the threshold *n*, while for the traditional terminal device on the ground, the number of cells that meet the triggering condition of measurement reporting needs to be greater than or equal to 1). Once the parameter *n* configured by the network device is unreasonable, the experience of the UAV terminal device cannot be improved with the enhanced measurement reporting mechanism. For example, if *n* is configured too large, the terminal device will be unable to trigger measurement reporting all the time, and then the terminal device will fail to trigger a wireless link, which is not worth the loss. On the other hand, the moving of the UAV terminal device is difficult to be predicted by the network device. If the network device has configured the parameter *n* but the terminal device is flying at a very low height, the number of cells that can be measured by the UAV terminal device in this case is close to the number of cells that can be measured by the terminal device on the ground. In this case, if the UAV terminal device is still required to trigger measurement reporting according to the threshold *n*, the UAV terminal device will also be unable to trigger the measurement reporting all the time, which will eventually lead to the failure of the terminal device to trigger the wireless link. Therefore, the measurement reporting triggering mechanism introduced for the UAV terminal device does not work well, but may affect the experience of the UAV terminal device.

FIG. 2 is a schematic flowchart of a method for measurement reporting 200 according to an embodiment of the present disclosure. Optionally, the method is applicable to the system as illustrated in FIG. 1, but is not limited thereto. The method includes at least part of the following.

S210, a terminal device controls a measurement reporting behavior of the terminal device by using a parameter associated with a first condition, where the first condition is a preset condition met by the terminal device.

In some implementations, the parameter associated with the first condition includes a cell quantity threshold. Correspondingly, the terminal device controls the measurement reporting behavior of the terminal device by using the parameter associated with the first condition as follows. In the case where the number of cells whose cell measurement results meet a measurement reporting event among cell measurement results at a frequency specified by an MO is greater than or equal to the cell quantity threshold, the measurement reporting behavior is triggered.

With the method for measurement reporting provided in the present disclosure, when a condition is suitable, the terminal device is enabled to control the measurement reporting behavior of the terminal device by using an appropriate cell quantity threshold, thereby preventing the terminal device from frequently triggering measurement reporting. When the condition is unsuitable, the terminal device is enabled to trigger measurement reporting in a relaxed manner, thereby avoiding a connection failure of the terminal device due to untimely triggering of measurement reporting.

The following two manners of triggering measurement reporting can be adopted in embodiments of the present disclosure.
Manner 1: when a network device has configured a cell quantity threshold n for controlling the measurement reporting behavior of the terminal device, the terminal device needs to determine, according to the preset condition, whether to control the measurement reporting behavior of the terminal device by using the cell quantity threshold *n*.
Manner 2: the network device configures at least one cell quantity threshold parameter for controlling the measurement reporting behavior of the terminal device. Each cell quantity threshold parameter is associated with an application condition. The terminal device controls its measurement reporting behavior by using a cell quantity threshold parameter associated with an application condition met by the measurement result of the terminal device.

The following will describe the two manners in detail with reference to specific embodiments.

### Manner 1

In some examples, the preset condition met by the terminal device is determined by the terminal device according to at least one of a signal measurement result of a serving cell, a height of the terminal device, a configuration corresponding to the serving cell, a first timer, or a moving speed of the terminal device.

For example, the preset condition includes one or more of the following single conditions: the signal measurement result of the serving cell being greater than or equal to a first threshold, the height of the terminal device being greater than or equal to a second threshold, a difference between the height of the terminal device and a height of a reference point being greater than or equal to a third threshold, a configuration corresponding to a serving cell of the terminal device belonging to a first configuration range, the terminal device being during running of the first timer, and the moving speed of the terminal device being less than or equal to a fourth threshold.

### Embodiment 1

For Manner 1 in the two manners of triggering measurement reporting, the preset condition can include at least one of the following conditions.
Condition 1: the terminal device measures that the signal measurement result of the current serving cell is greater than or equal to the first threshold.
Condition 2: the terminal device measures that the height (or referred to as altitude) of the terminal device is greater than or equal to the second threshold.
Condition 3: the terminal device measures that the difference between the height of the terminal device and the height of the reference point is greater than or equal to the third threshold.
Condition 4: the terminal device determines that the configuration corresponding to the current serving cell belongs to a preset configuration range.
Condition 5: during running of a valid timer configured.
Condition 6: the terminal device measures that the moving speed of the terminal device is less than or equal to the fourth threshold.

Specifically, for the preset condition, there can be the following two cases. That is, the preset condition includes only one single condition, or the preset condition includes at least two single conditions.

A beneficial logic of Condition 1 is as follows. When the terminal device starts to perform measurement on its neighboring cells and the terminal device measures that the signal measurement result of the current serving cell is good (i.e., the signal measurement result is greater than or equal to the first threshold), the more stringent measurement reporting rule (only when the measurement results of at least n cells among the cell measurement results measured at the frequency specified by the MO meet the measurement reporting event, the terminal device can trigger the measurement reporting behavior) is acceptable. Since the terminal device is less likely to fail to trigger the wireless link in the current serving cell in this case, it is feasible to control the frequency of measurement reporting of the terminal device by using the more stringent measurement reporting rule. On the other hand, when the terminal device measures that the measurement result of the serving cell is bad (for example, less than the first threshold), it is considered that the preset condition is not met. In this case, the terminal device is more likely to fail to trigger the wireless link, and the more relaxed measurement reporting rule (when the measurement result of at least one cell among the cell measurement results measured at the frequency specified by the MO meets the measurement reporting event, the terminal device can trigger the measurement reporting behavior) can make the network device trigger a switching process of the terminal device timely, thereby avoiding service interruption caused by untimely switching.

A beneficial logic of Condition 2 is similar to that of Condition 1. A difference between the UAV terminal device and the terminal device on the ground can only be reflected when the UAV terminal device is flying at a certain height in the air. Therefore, as stipulated in Condition 2, only when the terminal device measures that the height of the terminal device is greater than or equal to the second threshold, the terminal device will adopt the more stringent measurement reporting rule, where the second threshold can be determined according to a reference height. Otherwise, when the flight height of the terminal device does not meet Condition 2, it is considered that the preset condition is not met. In this case, the more relaxed measurement reporting rule is adopted by the terminal device to trigger measurement reporting.

Optionally, the second threshold can be equal to the reference height.

The beneficial logic of Condition 3 is similar to that of Condition 2. The difference between the UAV terminal device and the terminal device on the ground can only be reflected when the UAV terminal device is flying at a certain height in the air. Therefore, as stipulated in Condition 3, only when the terminal device measures that the difference between the height of the terminal device and the height of the reference point is greater than or equal to the third threshold, the terminal device will adopt the more stringent measurement reporting rule. Otherwise, when the flight height of the terminal device does not meet Condition 3, it is considered that the preset condition is not met. In this case, the more relaxed measurement reporting rule is adopted by the terminal device to trigger measurement reporting.

Optionally, the third threshold can be 0. In this case, Condition 3 actually means that the terminal device measures that the height of the terminal device is greater than or equal to the height of the reference point.

Condition 4 is described as follows. The more stringent measurement reporting rule is only applicable to a specified area, and the terminal device needs to determine whether the current serving cell belongs to the specified area. If the terminal device determines that the current serving cell belongs to the specified area, it is considered that the preset condition is met. In this case, the terminal device adopts the more stringent measurement reporting rule. Otherwise, if the terminal device determines that the current serving cell does not belong to the specified area, it is considered that the preset condition is not met. In this case, the more relaxed measurement reporting rule is adopted by the terminal device to trigger measurement reporting.

Exemplarily, the preset configuration includes at least one of the following configuration information: identity information of at least one cell, identity information of at least one tracking area code (TAC), at least one radio access network notification area code (RANAC), identity information of at least one public land mobile network (PLMN), or identity information of at least one geographic area.

Identity information of a cell is cell identity information, or the identity information of the cell includes a frequency and physical cell identity (PCI) information.
Example 1: when the preset configuration includes identity information of PLMN ID1 and PLMN ID2, if the terminal device knows, from a system broadcast message or a dedicated signaling of the current serving cell, that the current serving cell supports PLMN ID1 or PLMN ID2, it is considered that Condition 4 is met, otherwise, it is considered that Condition 4 is not met.
Example 2: when the preset configuration includes identity information 1 of a cell and cell identity information 2 of a cell, if the terminal device knows, from the system broadcast message or the dedicated signaling of the current serving cell, that the identity information of the current serving cell is identity information 1 or identity information 2, it is considered that Condition 4 is met, otherwise, it is considered that Condition 4 is not met.

Condition 5 is described as follows. In order to control the use of the cell quantity threshold parameter *n*, the network device can configure a valid timer for the terminal device. During the running of the valid timer, the more stringent measurement reporting rule is adopted by the terminal device to trigger measurement reporting. Once the valid timer stops running or expires, the more relaxed measurement reporting rule is adopted by the terminal device.

Optionally, when the terminal device has successfully received a message including a configuration associated with the valid timer, the behavior of the terminal device further includes starting or re-starting the valid timer.

Optionally, during the running of the valid timer, if the terminal device has successfully received the message including the configuration associated with the valid timer, the behavior of the terminal device further includes stopping the valid timer.

Optionally, when the valid timer expires, the behavior of the terminal device further includes adopting the more relaxed measurement reporting rule (when the measurement result of at least one cell among the cell measurement results measured at the frequency specified by the MO meets the measurement reporting event, the terminal device can trigger the measurement reporting behavior).

Condition 6 is described as follows. A beneficial logic of Condition 6 is as follows. When the moving speed of the terminal device is low, it is easy for the network device to control the mobility of the terminal device, and thus it is acceptable to control the number of measurement reporting of the terminal device by using the more stringent measurement reporting rule (only when the measurement results of at least n cells among the cell measurement results measured at the frequency specified by the MO meet the measurement reporting event, the terminal device can trigger the measurement reporting behavior). On the other hand, when the moving speed of the terminal device is high, it is difficult for the network device to control the mobility of the terminal device. In this case, if the number of measurement reporting of the terminal device is controlled by using the more stringent measurement reporting rule, the network device may trigger the switching of the terminal device untimely, thereby making the terminal device fail to trigger the wireless link. Therefore, when the moving speed of the terminal device is high, the more relaxed measurement reporting rule (when the measurement result of at least one cell among the cell measurement results measured at the frequency specified by the MO meets the measurement reporting event, the terminal device can trigger the measurement reporting behavior) is more beneficial to the terminal device.

The moving speed of the terminal device can mean any one of: the vertical speed of the terminal device, the horizontal speed of the terminal device, the vector resultant velocity of the terminal device, or the scalar resultant speed of the terminal device.

For the case where the preset condition includes at least two single conditions, when the terminal device meets at least one single condition in the preset condition, the terminal device meets the preset condition. Alternatively, when the terminal device meets all single conditions in the preset condition, the terminal device meets the preset condition.

For example, the preset condition is composed of at least two single conditions from Condition 1 to Condition 6. In this case, the preset condition being met can have any one of the following meanings.
Meaning 1: only when all of the at least two single conditions in the preset condition are met, the preset condition is considered to be met.
Meaning 2: as long as any one of the at least two single conditions in the preset condition is met, the preset condition is considered to be met.

The present disclosure does not limit the number of single conditions (Condition 1 to Condition 6) included in the preset condition.

Exemplarily, for example, the preset condition includes Condition 1 and Condition 2. When Meaning 1 is implemented, the preset condition is considered to be met only when both Condition 1 and Condition 2 are met (i.e., the terminal device measures that the signal measurement result of the current serving cell is greater than or equal to the first threshold, and the terminal device measures that the height of the terminal device is greater than or equal to the second threshold). Alternatively, when Meaning 2 is implemented, the preset condition is considered to be met when at least one of Condition 1 or Condition 2 is met (i.e., the terminal device measures that the signal measurement result of the current serving cell is greater than or equal to the first threshold, or the terminal device measures that the height of the terminal device is greater than or equal to the second threshold).

A rule of using another combined condition is similar to a rule of using the combination of Condition 1 or Condition 2, which is not repeated herein.

Other combined conditions include: Condition 1 and Condition 3, Condition 1 and Condition 4, Condition 2 and Condition 3, Condition 2 and Condition 4, Condition 3 and Condition 4, Condition 3 and Condition 5, Condition 4 and Condition 6, (Condition 1, Condition 2, and Condition 3), (Condition 1, Condition 2, and Condition 4), (Condition 1, Condition 3, and Condition 4), (Condition 2, Condition 3, and Condition 4), (Condition 1, Condition 2, Condition 3, and Condition 4), etc., which are not listed herein.

When the preset condition is configured, the terminal device can determine, according to the preset condition, whether to control the measurement reporting behavior of the terminal device by using the cell quantity threshold *n*. For example, when the preset condition is met and the number of cells whose cell measurement results meet the measurement reporting event among the cell measurement results at the frequency specified by the MO is greater than or equal to the cell quantity threshold, the measurement reporting behavior is triggered.

### Embodiment 2

When the terminal device determines that the preset condition is met, it is considered that the measurement reporting behavior of the terminal device can be controlled by using the cell quantity threshold *n.* In other words, only when the measurement results of at least *n* cells among the cell measurement results measured at the frequency specified by the MO meet the measurement reporting event, the terminal device can trigger the measurement reporting behavior. Otherwise, when the terminal device determines that the preset condition is not met, it is considered that the measurement reporting behavior of the terminal device cannot be controlled by using the cell quantity threshold *n*. In other words, when the measurement result of at least one cell among the cell measurement results measured at the frequency specified by the MO meets the measurement reporting event, the terminal device can trigger the measurement reporting behavior.

When the terminal device determines that the preset condition is not met, it is considered that the measurement reporting behavior of the terminal device cannot be controlled by using the cell quantity threshold *n*, which can have any one of the following meanings.
Meaning 1: when the terminal device determines that the preset condition is not met, it is considered that the cell quantity threshold parameter *n* configured by the network device is invalid (exactly, when the preset condition is not met, the cell quantity threshold parameter *n* is temporarily invalid). In this case, the terminal device can only process as if the network device does not configure the cell quantity threshold parameter *n*, that is, as long as the measurement result of at least one cell among the cell measurement results measured at the frequency specified by the MO meets the measurement reporting event, the terminal device needs to trigger measurement reporting.
Meaning 2: when the terminal device determines that the preset condition is not met, the value of the cell quantity threshold parameter *n* configured by the network device is directly considered to be 1. In this case, the measurement reporting behavior of the terminal device is that the terminal device needs to trigger measurement reporting as long as the measurement result of at least one (*n=* 1) cell among the cell measurement results measured at the frequency specified by the MO meets the measurement reporting event.

Exemplarily, the measurement reporting event can be any one of the following events.
Event A1: the signal measurement result of the serving cell is greater than an absolute threshold.
Event A2: the signal measurement result of the serving cell is less than an absolute threshold.
Event A3: a signal measurement result of a neighboring cell is one offset greater than a cell signal measurement result of a primary cell (PCell)/primary secondary cell (PSCell).
Event A4: the signal measurement result of the neighboring cell is greater than an absolute threshold.
Event A5: the cell signal measurement result of the PCell/PSCell is less than absolute threshold 1, and the cell signal measurement result of the neighboring cell/secondary cell (SCell) is greater than absolute threshold 2.
Event A6: the signal measurement result of the neighboring cell is one offset greater than the cell signal measurement result of the SCell.
Event B1: a measurement result of an inter-radio access technology (inter-RAT) neighbouring cell is greater than an absolute threshold.
Event B2: the cell signal measurement result of the PCell is less than absolute threshold 1, and the measurement result of the inter-RAT neighboring cell is greater than absolute threshold 2.

In some implementations, the cell signal measurement result can be a cell-level signal measurement result or a beam-level measurement result, and a measurement metric indicating the measurement result can include at least one of: a reference signal received power (RSRP), a reference signal received quality (RSRQ), or a signal to interference plus noise ratio (SINR).

In some implementations, the method for measurement reporting in the present disclosure can further include the following. The terminal device obtains configuration information related to the preset condition, where the configuration information related to the preset condition includes: type information of the preset condition and/or parameter configuration information associated with the preset condition.

For example, the parameter configuration information associated with the preset condition can include at least one of: the first threshold, the second threshold, the third threshold, the first configuration range, the first timer, the fourth threshold, or the height of the reference point.

### Embodiment 3 (introduction to the configuration information related to the preset condition)

Exemplarily, the configuration information related to the preset condition is configured in at least one of the following manners: a pre-configuration manner, a default configuration manner, a system broadcast message configuration manner, or a dedicated signaling configuration manner.

Exemplarily, the type information of the preset condition is used for informing the terminal device of what type of preset condition is used, for example, indicating any one preset condition from Condition 1 to Condition 6. Certainly, if the preset condition supports a combined preset condition consisting of at least two of Condition 1 to Condition 6, the type information of the preset condition can also indicate the combined preset condition. For example, if there are 8 preset conditions, one specific type of preset condition can be indicated by three bits.

In an implementation, the configuration information related to the preset condition only includes the parameter configuration information associated with the preset condition. In this implementation, the protocol only supports one type of preset condition, so that the configuration information related to the preset condition does not need to include the type information of the preset condition. For different types of preset conditions, configuration parameters corresponding to the parameter configuration information associated with the preset conditions are different. For example, when the preset condition is only Condition 1, the parameter configuration information associated with the preset condition includes a configuration of a parameter corresponding to the first threshold. For another example, when the preset condition is a combined condition composed of Condition 1 and Condition 2, the parameter configuration information associated with the preset condition includes the configuration of the parameter corresponding to the first threshold and a configuration of a parameter corresponding to the second threshold. Although the parameter configuration information associated with the preset condition includes the configuration of the parameter corresponding to the first threshold and the configuration of the parameter corresponding to the second threshold, a manner of configuring the parameter corresponding to the first threshold is the same as or different from a manner of configuring the parameter corresponding to the second threshold. For example, the parameter corresponding to the first threshold is configured by default, but the parameter corresponding to the second threshold is configured through the dedicated signaling sent by the network device. For another example, both the parameter corresponding to the first threshold and the parameter corresponding to the second threshold are configured through the dedicated signaling sent by the network device, which is not limited in the present disclosure.

In another implementation, the configuration information related to the preset condition includes the type information of the preset condition and the parameter configuration information associated with the preset condition. In this implementation, the protocol supports at least two types of preset conditions. In order to let the terminal device know which type of preset condition is used, the configuration information related to the preset condition needs to include the type information of the preset condition, for example, implemented through a choice function (choice {}) or a preset condition type ID. However, a determination rule corresponding to each type of preset condition is different, so that the configuration information related to the preset condition also needs to include the parameter configuration information associated with the preset condition. For example, when the type information of the preset condition correspondingly indicates Condition 1, the parameter configuration information associated with the preset condition needs to include the parameter corresponding to the first threshold. For another example, when the type information of the preset condition correspondingly indicates the combined condition composed of Condition 1 and Condition 2, the parameter configuration information associated with the preset condition needs to include the parameter corresponding to the first threshold and the parameter corresponding to the second threshold. Similarly, the manner of configuring the parameter corresponding to the first threshold is the same as or different from the manner of configuring the parameter corresponding to the second threshold, which is not repeated herein.

In some implementations, the network device can perform enable configuration on the terminal device, and the terminal device determines, according to the enable configuration, whether to determine, according to the preset condition, whether to control the measurement reporting behavior of the terminal device by using the cell quantity threshold *n*.

For example, the terminal device controls the measurement reporting behavior of the terminal device by using the parameter associated with the first condition as follows. The terminal device receives enable indication information. In the case where the enable indication information indicates that it is enabled to determine, according to the preset condition, whether to control the measurement reporting behavior of the terminal device by using the parameter associated with the first condition, when the terminal device meets the preset condition, the measurement reporting behavior of the terminal device is controlled by using the parameter associated with the first condition. When the terminal device fails to meet the preset condition, the measurement reporting behavior of the terminal device is controlled without using the parameter associated with the first condition, or the measurement reporting behavior of the terminal device is controlled by using a protocol default parameter. For example, controlling the measurement reporting behavior of the terminal device by using the protocol default parameter can mean that the measurement reporting behavior is triggered by the terminal device only when the measurement result of at least one cell among the cell measurement results measured at the frequency specified by the MO meets the measurement reporting event.

Optionally, after the terminal device receives the enable indication information, the method further includes the following. In the case where the enable indication information indicates that it is disabled to determine, according to the preset condition, whether to control the measurement reporting behavior of the terminal device by using the parameter associated with the first condition, the terminal device controls the measurement reporting behavior of the terminal device by using the parameter associated with the first condition.

### Embodiment 4

The terminal device receives the enable indication information (also referred to as switch indication information) from the network device, where the enable indication information indicates whether the terminal device is enabled to determine, according to the preset condition, whether to control the measurement reporting behavior of the terminal device by using the cell quantity threshold *n*.

Exemplarily, a rule of using the enable indication information is as follows.

When the enable indication information means "enabled", the terminal device can determine, according to the preset condition, whether to control the measurement reporting behavior of the terminal device by using the cell quantity threshold *n*. In other words, if the network device has configured the cell quantity threshold *n*, when the preset condition is met, the terminal device will trigger the measurement reporting behavior only when the measurement results of at least *n* cells among the cell measurement results measured at the frequency specified by the MO meet the measurement reporting event. Otherwise, when the preset condition is not met, even if the network device has configured the cell quantity threshold *n*, the terminal device will trigger the measurement reporting behavior when the measurement result of at least one cell among the cell measurement results measured at the frequency specified by the MO meets the measurement reporting event.

When the enable indication information means "disabled", as long as the network device has configured the cell quantity threshold *n*, regardless of whether the preset condition is met, the terminal device will trigger the measurement reporting behavior only when the measurement results of at least *n* cells among the cell measurement results measured at the frequency specified by the MO meet the measurement reporting event.

Optionally, if the network device does not configure the cell quantity threshold *n*, regardless of whether the enable indication information is set to "enabled" or "disabled", the terminal device will trigger the measurement reporting behavior only when the measurement result of at least one cell among the cell measurement results measured at the frequency specified by the MO meets the measurement reporting event.

In some implementations, the terminal device can send capability indication information to the network device, where the capability indication information indicates whether the terminal device supports determining, according to the preset condition, whether to control the measurement reporting behavior by using the parameter associated with the first condition.

### Embodiment 5:

The terminal device sends the capability indication information to the network device, where the capability indication information indicates whether the terminal device supports determining, according to the preset condition, whether to control the measurement reporting behavior of the terminal device by using the cell quantity threshold *n*.

Exemplarily, the capability indication information has the following meanings.

When the capability indication information means "supported", it indicates that the terminal device supports determining, according to the preset condition, whether to control the measurement reporting behavior of the terminal device by using the cell quantity threshold *n*.

In an implementation, when the network device learns from the capability indication information that the terminal device can determine, according to the preset condition, whether to control the measurement reporting behavior of the terminal device by using the cell quantity threshold n, the behavior of the network device further includes configuring the configuration information related to the preset condition for the terminal device.

When the capability indication information means "unsupported", it indicates that the terminal device does not support determining, according to the preset condition, whether to control the measurement reporting behavior of the terminal device by using the cell quantity threshold *n*. In other words, as long as the network device has configured the cell quantity threshold *n*, the terminal device will trigger the measurement reporting behavior only when the measurement results of at least *n* cells among the cell measurement results measured at the frequency specified by the MO meet the measurement reporting event.

Several embodiments of Manner 1 in the two manners of triggering measurement reporting are described above. Manner 2 in the two manners of triggering measurement reporting will be described below.

### Manner 2

In some examples, the preset condition met by the terminal device is determined by the terminal device according to at least one of the signal measurement result of the serving cell, the height of the terminal device, the configuration corresponding to the serving cell, the first timer, or the moving speed of the terminal device.

For example, the preset condition includes one or more of the following single conditions: the signal measurement result of the serving cell belonging to a value range, the height of the terminal device belonging to a value range, the difference between the height of the terminal device and the height of the reference point belonging to a value range, the configuration corresponding to the serving cell belonging to a configuration range, and the moving speed of the terminal device belonging to a value range.

The moving speed of the terminal device can mean any one of: the vertical speed of the terminal device, the horizontal speed of the terminal device, the vector resultant velocity of the terminal device, or the scalar resultant speed of the terminal device.

In some implementations, the terminal device controls the measurement reporting behavior of the terminal device by using the parameter associated with the first condition as follows. The terminal device determines the first condition met by the terminal device from multiple pre-configured preset conditions. The terminal device controls the measurement reporting behavior of the terminal device by using the parameter associated with the first condition.

### Embodiment 6

For Manner 2 in the two manners of triggering measurement reporting, the network device configures at least one cell quantity threshold parameter for controlling the measurement reporting behavior of the terminal device. Each cell quantity threshold parameter is associated with an application condition. The terminal device controls its measurement reporting behavior by using a cell quantity threshold parameter associated with an application condition met by the measurement result of the terminal device. The application condition includes at least one of the following.
Application Condition 1: the signal measurement result of the serving cell measured by the terminal device meets a value range.
Application Condition 2: the height of the terminal device measured by itself meets a value range.
Application Condition 3: the difference between the height of the terminal device measured by itself and the height of the reference point meets a value range.
Application Condition 4: the terminal device determines that the configuration corresponding to the current serving cell belongs to the preset configuration range.
Application Condition 5: the moving speed of the terminal device measured by itself meets a value range.

Specifically, for the preset condition, there can be the following two cases. That is, the preset condition includes only one single condition, or the preset condition includes at least two single conditions.

An example of using Application Condition 1 is as follows. The network device has configured three cell quantity threshold parameters (hereinafter referred to as cell quantity threshold parameter 1, cell quantity threshold parameter 2, and cell quantity threshold parameter 3) for controlling the measurement reporting behavior of the terminal device. Cell quantity threshold parameter 1 takes the value of 3, and its associated application condition is that the signal measurement result of the serving cell measured by the terminal device is greater than or equal to threshold 4. Cell quantity threshold parameter 2 takes the value of 2, and its associated application condition is that the signal measurement result of the serving cell measured by the terminal device is greater than or equal to threshold 5 and less than threshold 4. Cell quantity threshold parameter 3 takes the value of 1, and its associated application condition is that the signal measurement result of the serving cell measured by the terminal device is less than threshold 5.

If the signal measurement result of the current serving cell actually measured by the terminal device is greater than or equal to threshold 4, the measurement reporting behavior of the terminal device is controlled by using cell quantity threshold parameter 1 (i.e., only when measurement results of at least three cells among the cell measurement results measured at the frequency specified by the MO meet the measurement reporting event, the terminal device can trigger measurement reporting). If the signal measurement result of the current serving cell actually measured by the terminal device is greater than or equal to threshold 5 and less than threshold 4, the measurement reporting behavior of the terminal device is controlled by using cell quantity threshold parameter 2. If the signal measurement result of the current serving cell actually measured by the terminal device is less than threshold 5, the measurement reporting behavior of the terminal device is controlled by using cell quantity threshold parameter 3.

An example of using Application Condition 2 is as follows. The network device has configured three cell quantity threshold parameters (hereinafter referred to as cell quantity threshold parameter 1, cell quantity threshold parameter 2, and cell quantity threshold parameter 3) for controlling the measurement reporting behavior of the terminal device. Cell quantity threshold parameter 1 takes the value of 3, and its associated application condition is that the height of the terminal device measured by itself is greater than or equal to threshold 4. Cell quantity threshold parameter 2 takes the value of 2, and its associated application condition is that the height of the terminal device measured by itself is greater than or equal to threshold 5 and less than threshold 4. Cell quantity threshold parameter 3 takes the value of 1, and its associated application condition is that the height of the terminal device measured by itself is less than threshold 5.

If the height of the terminal device actually measured by itself is greater than or equal to threshold 4, the measurement reporting behavior of the terminal device is controlled by using cell quantity threshold parameter 1 (i.e., only when the measurement results of at least three cells among the cell measurement results measured at the frequency specified by the MO meet the measurement reporting event, the terminal device can trigger measurement reporting). If the height of the terminal device actually measured by itself is greater than or equal to threshold 5 and less than threshold 4, the measurement reporting behavior of the terminal device is controlled by using cell quantity threshold parameter 2. If the height of the terminal device actually measured by itself is less than threshold 5, the measurement reporting behavior of the terminal device is controlled by using cell quantity threshold parameter 3.

An example of using Application Condition 3 is as follows. The network device has configured three cell quantity threshold parameters (hereinafter referred to as cell quantity threshold parameter 1, cell quantity threshold parameter 2, and cell quantity threshold parameter 3) for controlling the measurement reporting behavior of the terminal device. Cell quantity threshold parameter 1 takes the value of 3, and its associated application condition is that the difference between the height of the terminal device measured by itself and the height of the reference point is greater than or equal to threshold 4. Cell quantity threshold parameter 2 takes the value of 2, and its associated application condition is that the difference between the height of the terminal device measured by itself and the height of the reference point is greater than or equal to threshold 5 and less than threshold 4. Cell quantity threshold parameter 3 takes the value of 1, and its associated application condition is that the difference between the height of the terminal device measured by itself and the height of the reference point is less than threshold 5.

If the difference between the height of the terminal device actually measured by itself and the height of the reference point is greater than or equal to threshold 4, the measurement reporting behavior of the terminal device is controlled by using cell quantity threshold parameter 1 (i.e., only when the measurement results of at least three cells among the cell measurement results measured at the frequency specified by the MO meet the measurement reporting event, the terminal device can trigger measurement reporting). If the difference between the height of the terminal device actually measured by itself and the height of the reference point is greater than or equal to threshold 5 and less than threshold 4, the measurement reporting behavior of the terminal device is controlled by using cell quantity threshold parameter 2. If the difference between the height of the terminal device actually measured by itself and the height of the reference point is less than threshold 5, the measurement reporting behavior of the terminal device is controlled by using cell quantity threshold parameter 3.

An example of using Application Condition 4 is as follows. The network device has configured three cell quantity threshold parameters (hereinafter referred to as cell quantity threshold parameter 1, cell quantity threshold parameter 2, and cell quantity threshold parameter 3) for controlling the measurement reporting behavior of the terminal device. Cell quantity threshold parameter 1 takes the value of 3, and its associated application condition is that the terminal device determines that the configuration corresponding to the current serving cell belongs to preset configuration range 1. Cell quantity threshold parameter 2 takes the value of 2, and its associated application condition is that the terminal device determines that the configuration corresponding to the current serving cell belongs to preset configuration range 2. Cell quantity threshold parameter 3 takes the value of 1, and its associated application condition is that the terminal device determines that the configuration corresponding to the current serving cell belongs to preset configuration range 3.

If the terminal device determines that the configuration corresponding to the current serving cell belongs to preset configuration range 1, the measurement reporting behavior of the terminal device is controlled by using cell quantity threshold parameter 1 (i.e., only when the measurement results of at least three cells among the cell measurement results measured at the frequency specified by the MO meet the measurement reporting event, the terminal device can trigger measurement reporting). If the terminal device determines that the configuration corresponding to the current serving cell belongs to preset configuration range 2, the measurement reporting behavior of the terminal device is controlled by using cell quantity threshold parameter 2. If the terminal device determines that the configuration corresponding to the current serving cell belongs to preset configuration range 3, the measurement reporting behavior of the terminal device is controlled by using cell quantity threshold parameter 3.

Exemplarily, the preset configuration includes at least one of the following configuration information: identity information of at least one cell, identity information of at least one TAC, at least one RANAC, identity information of at least one PLMN, or identity information of at least one geographic area.

Identity information of a cell is cell identity information, or the identity information of the cell includes a frequency and PCI information.

An example of using Application Condition 5 is as follows. The network device has configured three cell quantity threshold parameters (hereinafter referred to as cell quantity threshold parameter 1, cell quantity threshold parameter 2, and cell quantity threshold parameter 3) for controlling the measurement reporting behavior of the terminal device. Cell quantity threshold parameter 1 takes the value of 1, and its associated application condition is that the moving speed of the terminal device measured by itself is greater than or equal to threshold 4. Cell quantity threshold parameter 2 takes the value of 2, and its associated application condition is that the moving speed of the terminal device measured by itself is greater than or equal to threshold 5 and less than threshold 4. Cell quantity threshold parameter 3 takes the value of 3, and its associated application condition is that the moving speed of the terminal device measured by itself is less than threshold 5.

If the moving speed of the terminal device actually measured by itself is greater than or equal to threshold 4, the measurement reporting behavior of the terminal device is controlled by using cell quantity threshold parameter 1 (i.e., only when the measurement results of at least three cells among the cell measurement results measured at the frequency specified by the MO meet the measurement reporting event, the terminal device can trigger measurement reporting). If the moving speed of the terminal device actually measured by itself is greater than or equal to threshold 5 and less than threshold 4, the measurement reporting behavior of the terminal device is controlled by using cell quantity threshold parameter 2. If the moving speed of the terminal device actually measured by itself is less than threshold 5, the measurement reporting behavior of the terminal device is controlled by using cell quantity threshold parameter 3.

For the case where the preset condition includes at least two single conditions, when the terminal device meets at least one single condition in the preset condition, the terminal device meets the preset condition. Alternatively, when the terminal device meets all single conditions in the preset condition, the terminal device meets the preset condition.

For example, the application condition is composed of at least two single conditions from Application Condition 1 to Application Condition 5. In this case, the application condition being met can have any one of the following meanings.
Meaning 1: only when all of the at least two single conditions in the application condition are met, the application condition is considered to be met.
Meaning 2: as long as any one of the at least two single conditions in the application condition is met, the application condition is considered to be met.

The present disclosure does not limit the number of single conditions (Application Condition 1 to Application Condition 5) included in the application condition.

Exemplarily, for example, the preset condition includes Application Condition 1 and Application Condition 2. When Meaning 1 is implemented, the preset condition is considered to be met only when both Application Condition 1 and Application Condition 2 are met (i.e., the terminal device measures that the signal measurement result of the current serving cell meets a value range, and the terminal device measures that the height of the terminal device measured a value range). Alternatively, when Meaning 2 is implemented, the preset condition is considered to be met when at least one of Application Condition 1 or Application Condition 2 is met (i.e., the terminal device measures that the signal measurement result of the current serving cell meets a value range, or the terminal device measures that the height of the terminal device meets a value range).

A rule of using another combined condition is similar to a rule of using the combination of Application Condition 1 or Application Condition 2, which is not repeated herein.

In some implementations, the method for measurement reporting provided in the present disclosure can further include the following. The terminal device obtains the configuration information related to the preset condition, where the configuration information related to the preset condition includes at least one of: a parameter associated with at least one preset condition, where the parameter is used for controlling the measurement reporting behavior of the terminal device, the type information of the preset condition, or the parameter configuration information associated with the preset condition.

For example, the parameter can refer to the cell quantity threshold.

Exemplarily, the parameter associated with at least one preset condition includes at least one cell quantity threshold parameter for controlling the measurement reporting behavior of the terminal device, and the terminal device controls the measurement reporting behavior of the terminal device by using the cell quantity threshold parameter.

The parameter configuration information associated with the preset condition includes at least one of: at least one value range, a boundary value of the at least one value range, at least one configuration range, or the height of the reference point.

The preset condition can be a single condition or a combined condition. When multiple preset conditions are defined in the protocol, each preset condition can correspond to one type information of the preset condition.

### Embodiment 7 (configuration information related to the application condition)

The behavior of the terminal device further includes obtaining the configuration information related to the application condition.

The configuration information related to the application condition includes at least one of: at least one cell quantity threshold parameter for controlling the measurement reporting behavior of the terminal device, parameter configuration information of an application condition associated with the cell quantity threshold parameter, or type information of the application condition associated with the cell quantity threshold parameter.

The parameter configuration information of the application condition includes at least one value range threshold (e.g., threshold 4, threshold 5) and/or at least one set of preset configuration ranges.

The configuration information related to the application condition is configured in at least one of the following manners: the pre-configuration manner, the default configuration manner, the system broadcast message configuration manner, or the dedicated signaling configuration manner.

In some implementations, the terminal device can further send the capability indication information to the network device. For example, the terminal device sends the capability indication information to the network device, where the capability indication information indicates whether the terminal device supports determining, according to different application conditions, which set of associated cell quantity threshold parameters is used for controlling the measurement reporting behavior of the terminal device.

The two manners of triggering measurement reporting are introduced above. In some implementations, the terminal device can further scale a measurement reporting event control parameter time to trigger (TTT) according to at least one of a current height or a current moving speed, which is applicable for both Manner 1 and Manner 2 in the two manners of triggering measurement reporting.

For example, the terminal device can scale the measurement reporting event control parameter TTT according to at least one of the current height or the current moving speed by using a preset correspondence and/or a preset scaling manner.

Specifically, the preset correspondence and/or the preset scaling manner include the following. As at least one of the current height or the current moving speed increases, the value of the measurement reporting event control parameter TTT increases. Alternatively, as at least one of the current height or the current moving speed increases, the value of the measurement reporting event control parameter TTT decreases. Alternatively, when the current height is in a first value range and/or the current moving speed is in a second value range, the value of the measurement reporting event control parameter TTT is fixed.

There can be multiple first value ranges and multiple second value ranges, and each value range can correspond to a TTT value.

### Embodiment 7

Optionally, the terminal device can also determine, according to its current height information and/or its current speed information, how to scale the measurement reporting event control parameter TTT.

The possibilities are as follows.
Rule 1: the measurement reporting parameter TTT is negatively correlated or positively correlated with the current height of the terminal device. In other words, a greater current height of the terminal device leads to a smaller measurement reporting parameter TTT, for example, TTT_{new}= (-*a*TTT_{original}/*H*)+*b*. Alternatively, the greater current height of the terminal device leads to a greater measurement reporting parameter TTT, for example, TTT_{new}= (*a*TTT_{original}×*H*)+*b*. Parameter *a* is a positive number, parameter *b* is a non-negative number, and H indicates the current height of the terminal device.
Rule 2: the measurement reporting parameter TTT is in a negatively tiered correlation or a positively tiered correlation with the current height of the terminal device. The negatively tiered correlation has the following meanings. When the current height of the terminal device is in a first height range, the value of a scaled-down TTT is 1. When the current height of the terminal device is in a second height range, the value of the scaled-down TTT is 2. The number of TTTs actually used by the terminal device is determined by the number of height ranges. For example, as stipulated in the protocol, when the current height of the terminal device belongs to a range of [0, 50 meters), the original value of TTT is not scaled. When the current height of the terminal device belongs to a range of [50 meters, 100 meters), TTT_{new}= TTT_{original}/2. When the current height of the terminal device belongs to a range of [100 meters, infinite height), TTT_{new}= TTT_{original}/3. Similarly, the positively tiered correlation has the following meanings. When the current height of the terminal device is in the first height range, the value of a scaled-up TTT is 3. When the current height of the terminal device is in the second height range, the value of the scaled-up TTT is 4. The number of TTTs actually used by the terminal device is determined by the number of height ranges. For example, as stipulated in the protocol, when the current height of the terminal device belongs to the range of [0, 50 meters), the original value of TTT is not scaled. When the current height of the terminal device belongs to the range of [50 meters, 100 meters), TTT_{new}= 1.5TTT_{original}. When the current height of the terminal device belongs to a range of [100 meters, infinite height), TTT_{new}= 2TTT_{original}.
Rule 3: the measurement reporting parameter TTT is negatively correlated or positively correlated with the current speed of the terminal device. In other words, a higher current speed of the terminal device leads to the smaller measurement reporting parameter TTT, for example, TTT_{new}= (-*a*TTT_{original}/*S*)+*b*. Alternatively, the higher current speed of the terminal device leads to the greater measurement reporting parameter TTT, for example, TTT_{new}= (*a*TTT_{original}×*S*)+*b*. Both parameter *a* and parameter *b* are positive numbers, and S indicates the current speed of the terminal device.
Rule 4: the measurement reporting parameter TTT is in a negatively tiered correlation or a positively tiered correlation with the current speed of the terminal device. The negatively tiered correlation has the following meanings. When the current speed of the terminal device is in a first speed range, the value of the scaled-down TTT is 1. When the current speed of the terminal device is in a second speed range, the value of the scaled-down TTT is 2. The number of TTTs actually used by the terminal device is determined by the number of speed ranges. For example, as stipulated in the protocol, when the current speed of the terminal device belongs to a range of [0, 5 m/s), the original value of TTT is not scaled. When the current speed of the terminal device belongs to a range of [5 m/s, 10 m/s), TTT_{new}= TTT_{original}/2. When the current speed of the terminal device belongs to a range of [10 m/s, infinite speed), TTT_{new}= TTT_{original}/3. Similarly, the positively tiered correlation has the following meanings. When the current speed of the terminal device is in the first speed range, the value of the scaled-up TTT is 3. When the current speed of the terminal device is in the second speed range, the value of the scaled-up TTT is 4. The number of TTTs actually used by the terminal device is determined by the number of speed ranges. For example, as stipulated in the protocol, when the current speed of the terminal device belongs to the range of [0, 5 m/s), the original value of TTT is not scaled. When the current speed of the terminal device belongs to the range of [5 m/s, 10 m/s), TTT_{new}= 1.5TTT_{original}. When the current speed of the terminal device belongs to a range of [10 m/s, infinite speed), TTT_{new}= 2TTT_{original}.
Rule 5: both the current height information of the terminal device and the current speed information of the terminal device are considered. For example, a greater height of the terminal device and a higher speed of the terminal device lead to a smaller value of TTT. A smaller height of the terminal device and a lower speed of the terminal device lead to a greater value of TTT or maintain the original value of TTT. In other cases, the value of TTT is between the values of TTT in the two cases mentioned above.

TTT_{original} can be configured by the network device for the terminal device.

In some implementations, the method for measurement reporting provided in the present disclosure can further include the following. When the terminal device triggers measurement reporting, the terminal device simultaneously starts a second timer. During the running of the second timer, the terminal device disables triggering of measurement reporting for any frequency, or disables triggering of measurement reporting for a frequency included in an MO associated with the second timer.

Specifically, the second timer is applicable to frequencies included in all MOs configured for the terminal device. In other words, during the running of the second timer, the terminal device is disabled to trigger measurement reporting for any frequency. Alternatively, the second timer is configured at the granularity of MO or frequency. For example, the second timer is applicable to the frequency included in the MO associated with the second timer. In other words, during the running of the second timer, the terminal device is disabled to trigger measurement reporting for the frequency included in the MO associated with the second timer.

Measurement reporting can be triggered when a cell measurement result at the frequency in the MO meets the measurement reporting event, or triggered when a current measurement result of a cell, which previously met the measurement reporting event, at the frequency in the MO meets a measurement reporting event leaving condition. For example, in an initial state, there are Cell 1 and Cell 2 at the frequency in the MO that meet the measurement reporting event. When there is a new cell meeting the measurement reporting event, for example, when Cell 3 meets the measurement reporting event, measurement reporting is triggered. Alternatively, in the initial state, there are Cell 1 and Cell 2 at the frequency in the MO that meet the measurement reporting event. When a current measurement result of Cell 2 meets the measurement reporting event leaving condition, measurement reporting is triggered. For the case where the second timer is configured at the granularity of terminal, that is, applicable to any frequency, the following can also be included.

Further, in the case where the second timer expires, when a cell measurement result of at least one cell measured at a frequency included in any MO configured by the terminal device meets a measurement reporting event associated with the MO, the terminal device triggers measurement reporting for the frequency included in the MO. Alternatively. in the case where the second timer expires, when a cell measurement result of at least one cell measured at a frequency included in any MO configured by the terminal device meets a measurement reporting event leaving condition associated with the MO, the terminal device triggers measurement reporting for the frequency included in the MO.

Optionally, in the case where the measurement reporting event associated with the MO is met, the cell for which measurement reporting of the terminal device is triggered only includes a new cell other than a cell for which measurement reporting is previously triggered (i.e., a cell that previously met the measurement reporting event associated with the MO), and a measurement result of the new cell meets the measurement reporting event associated with the MO. Alternatively, a relationship between the cell for which measurement reporting is currently triggered and the cell for which measurement reporting is previously triggered is not limited (i.e., as long as the cell measurement result of at least one cell at the frequency associated with the MO meets the measurement reporting event associated with the MO, measurement reporting is triggered). Certainly, if a cell quantity threshold configuration associated with the MO is also valid, before measurement reporting is triggered, a cell quantity threshold condition also needs to be met.

Optionally, in the case where the measurement reporting event leaving condition associated with the MO is met, the cell for which measurement reporting of the terminal device is triggered is a cell that previously met the measurement reporting event associated with the MO.

Optionally, the cell for which measurement reporting is previously triggered or the cell that previously met the measurement reporting event associated with the MO can only include a cell for which measurement reporting is triggered last time, or can include a cell for which measurement reporting is triggered multiple times.

Exemplarily, the network device has configured a cell quantity threshold parameter with a value of 3 for the terminal device. The parameter is associated with MO1. When the number of cells that meet the measurement reporting event at a frequency corresponding to MO1 is greater than or equal to the cell quantity threshold, for example, the cells that meet the measurement reporting event include Cell A, Cell B, Cell C, and Cell D, the terminal device triggers measurement reporting one time and starts the second timer. During the running of the second timer, the terminal device is disabled to trigger measurement reporting at any frequency. In other words, during the running of the second timer, even if a measurement result of a new cell meets the measurement reporting event associated with the MO or a measurement result of a cell meets the measurement reporting event leaving condition associated with the MO, the terminal device is disabled to trigger measurement reporting at any frequency. When the second timer expires, if a measurement result of at least one new cell (for example, a cell different from Cell A, Cell B, Cell C, or Cell D at the frequency corresponding to MO1, such as Cell E and Cell F) meets the measurement reporting event associated with the MO, and the number of cells that meet the measurement reporting event at the frequency corresponding to the MO is greater than or equal to 1 (in the case where the MO is not configured with the cell quantity threshold) or the number of cells that meet the measurement reporting event at the frequency corresponding to the MO is greater than or equal to a configured cell quantity threshold (in the case where the MO is configured with a valid cell quantity threshold), the terminal device triggers measurement reporting and starts the second timer. Additionally/alternatively, after the second timer expires, if a measurement result of at least one cell (for example, Cell A, Cell B, Cell C, or Cell D at the frequency corresponding to MO1) for which measurement reporting of the terminal device is triggered meets a measurement reporting event leaving event associated with the MO (an Onleave parameter related to the measurement reporting event associated with the MO has been configured as enabling triggering of leaving event reporting), the terminal device triggers measurement reporting and starts the second timer. The terminal device subsequently repeats the process described above, which is not repeated herein.

Alternatively, for the case where the second timer is configured at the granularity of MO or frequency, the following can also be included. In the case where the second timer expires, when a cell measurement result of at least one cell measured at the frequency included in the MO associated with the second timer meets a measurement reporting event associated with the MO, the terminal device triggers measurement reporting for the frequency included in the MO associated with the second timer. Alternatively, in the case where the second timer expires, when a cell measurement result of at least one cell measured at the frequency included in the MO associated with the second timer meets a measurement reporting event leaving condition associated with the MO, the terminal device triggers measurement reporting for the frequency included in the MO associated with the second timer.

Exemplarily, the network device has configured the cell quantity threshold parameter with the value of 3 for the terminal device. The parameter is associated with MO1. When the number of cells that meet the measurement reporting event at the frequency corresponding to MO1 is greater than or equal to the cell quantity threshold, for example, the cells that meet the measurement reporting event include Cell A, Cell B, Cell C, and Cell D, the terminal device triggers measurement reporting one time and starts the second timer. During the running of the second timer, the terminal device is disabled to trigger measurement reporting at the frequency associated with the second timer. In other words, during the running of the second timer, even if a measurement result of a new cell at the frequency meets the measurement reporting event associated with the MO or a measurement result of a cell meets the measurement reporting event leaving condition associated with the MO, the terminal device is disabled to trigger measurement reporting at the frequency. When the second timer expires, if a measurement result of at least one new cell at the frequency corresponding to MO1 (for example, a cell different from Cell A, Cell B, Cell C, or Cell D at the frequency corresponding to MO1, such as Cell E and Cell F) meets the measurement reporting event associated with MO1, and the number of cells that meet the measurement reporting event at the frequency corresponding to MO1 is greater than or equal to 1 (in the case where MO1 is not configure with the cell quantity threshold) or the number of cells that meet the measurement reporting event at the frequency corresponding to MO1 is greater than or equal to a configured cell quantity threshold (in the case where MO1 is configured with the valid cell quantity threshold), the terminal device triggers measurement reporting and starts the second timer. Additionally/alternatively, after the second timer expires, if a measurement result of at least one cell (for example, Cell A, Cell B, Cell C, or Cell D at the frequency corresponding to MO1) for which measurement reporting of the terminal device is triggered meets a measurement reporting event leaving event associated with MO1 (an Onleave parameter related to the measurement reporting event associated with MO1 has been configured as enabling triggering of leaving event reporting), the terminal device triggers measurement reporting and starts the second timer. The terminal device subsequently repeats the process described above, which is not repeated herein.

In some implementations, the second timer is configured in at least one of the following manners: the pre-configuration manner, the default configuration manner, the system broadcast message configuration manner, or the dedicated signaling configuration manner.

The above describes multiple embodiments of the method for measurement reporting provided in the present disclosure. It can be emphasized that the above embodiments are not completely independent of each other, and features of related embodiments can be reasonably combined.

FIG. 3 is a schematic flowchart of a method for measurement reporting management 300 according to an embodiment of the present disclosure. Optionally, the method is applicable to the system as illustrated in FIG. 1, but is not limited thereto. The method includes at least part of the following.

S310, a network device sends one or more preset conditions and/or parameters associated with the one or more preset conditions to a terminal device.

In some implementations, the one or more preset conditions and/or the parameters associated with the one or more preset conditions are used for controlling a measurement reporting behavior of the terminal device.

In some implementations, the preset condition includes one or more of the following single conditions: a signal measurement result of a serving cell being greater than or equal to a first threshold, a height of the terminal device being greater than or equal to a second threshold, a difference between the height of the terminal device and a height of a reference point being greater than or equal to a third threshold, a configuration corresponding to the serving cell belonging to a first configuration range, the terminal device being during running of a first timer, and a moving speed of the terminal device being less than or equal to a fourth threshold.

In some implementations, the method for measurement reporting management can further include the following. The network device sends enable indication information to the terminal device, where the enable indication information indicates whether it is enabled to determine, according to the preset condition, whether to control a measurement reporting behavior of the terminal device by using a parameter associated with a first condition.

In some implementations, the method for measurement reporting management can further include the following. The network device configures configuration information related to the preset condition for the terminal device, where the configuration information related to the preset condition includes: type information of the preset condition, and/or parameter configuration information associated with the preset condition.

In some implementations, the parameter configuration information associated with the preset condition includes at least one of: the first threshold, the second threshold, the third threshold, the first configuration range, the first timer, the fourth threshold, or the height of the reference point.

In some implementations, the preset condition includes one or more of the following single conditions: the signal measurement result of the serving cell belonging to a value range, the height of the terminal device belonging to a value range, the difference between the height of the terminal device and the height of the reference point belonging to a value range, the configuration corresponding to the serving cell belonging to a configuration range, and the moving speed of the terminal device belonging to a value range.

In some implementations, the method for measurement reporting management can further include the following. The network device configures the configuration information related to the preset condition for the terminal device, where the configuration information related to the preset condition includes at least one of: a parameter associated with at least one preset condition, where the parameter is used for controlling a measurement reporting behavior of the terminal device, the type information of the preset condition, or the parameter configuration information associated with the preset condition.

In some implementations, the parameter configuration information associated with the preset condition includes at least one of: at least one value range, a boundary value of the at least one value range, at least one configuration range, or the height of the reference point.

In some implementations, the configuration information related to the preset condition is configured in at least one of the following manners: a pre-configuration manner, a default configuration manner, a system broadcast message configuration manner, or a dedicated signaling configuration manner.

In some implementations, in the case where the preset condition includes multiple single conditions, when the terminal device meets at least one of the multiple single conditions in the preset condition, the terminal device meets the preset condition. Alternatively, when the terminal device meets all of the multiple single conditions in the preset condition, the terminal device meets the preset condition.

In some implementations, the parameter associated with the first condition includes a cell quantity threshold.

In some implementations, the method for measurement reporting management can further include the following. The network device receives capability indication information from the terminal device, where the capability indication information indicates whether the terminal device supports determining, according to the preset condition, whether to control a measurement reporting behavior by using a parameter associated with a first condition.

In some implementations, the method for measurement reporting management can further include the following. The network device configures a scaling parameter for the terminal device, where the scaling parameter is used for scaling a measurement reporting event control parameter TTT.

In some implementations, the method for measurement reporting management can further include the following. The network device configures a second timer for the terminal device in at least one of the following manners: the pre-configuration manner, the default configuration manner, the system broadcast message configuration manner, or the dedicated signaling configuration manner.

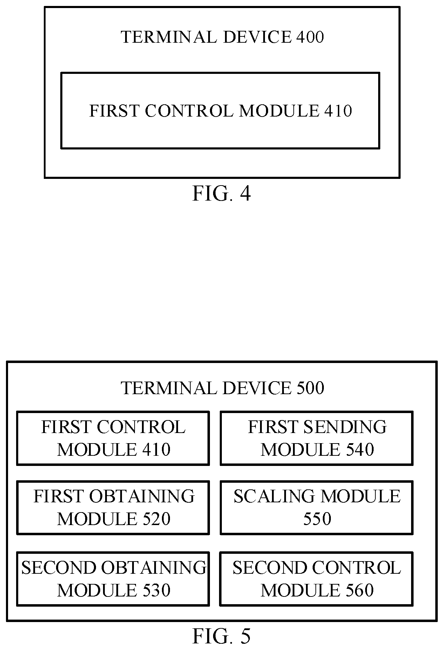

FIG. 4 is a schematic block diagram of a terminal device 400 according to an embodiment of the present disclosure. The terminal device 400 can include a first control module 410. The first control module 410 is configured to control a measurement reporting behavior of the terminal device by using a parameter associated with a first condition, where the first condition is a preset condition met by the terminal device.

In some implementations, the preset condition met by the terminal device is determined by the first control module 410 according to at least one of a signal measurement result of a serving cell, a height of the terminal device, a configuration corresponding to the serving cell, a first timer, or a moving speed of the terminal device.

In some implementations, the preset condition includes one or more of the following single conditions: the signal measurement result of the serving cell being greater than or equal to a first threshold, the height of the terminal device being greater than or equal to a second threshold, a difference between the height of the terminal device and a height of a reference point being greater than or equal to a third threshold, the configuration corresponding to the serving cell belonging to a first configuration range, the terminal device being during running of a first timer, and the moving speed of the terminal device being less than or equal to a fourth threshold.

In some implementations, the first control module 410 is configured to receive enable indication information. In the case where the enable indication information indicates that it is enabled to determine, according to the preset condition, whether to control the measurement reporting behavior of the terminal device by using the parameter associated with the first condition, when the terminal device meets the preset condition, the first control module 410 is configured to control the measurement reporting behavior of the terminal device by using the parameter associated with the first condition, and when the terminal device fails to meet the preset condition, the first control module 410 is configured to control the measurement reporting behavior of the terminal device without using the parameter associated with the first condition, or control the measurement reporting behavior of the terminal device by using a protocol default parameter.

In some implementations, the first control module 410 is further configured to, in the case where the enable indication information indicates that it is disabled to determine, according to the preset condition, whether to control the measurement reporting behavior of the terminal device by using the parameter associated with the first condition, control, by the terminal device, the measurement reporting behavior of the terminal device by using the parameter associated with the first condition.

FIG. 5 is a schematic block diagram of a terminal device 500 according to an embodiment of the present disclosure. The terminal device 500 includes one or more features of the terminal device 400 in the above embodiment. In a possible implementation, in embodiments of the present disclosure, the terminal device 500 further includes a first obtaining module 520. The first obtaining module 520 is configured to obtain configuration information related to the preset condition, where the configuration information related to the preset condition includes: type information of the preset condition, and/or parameter configuration information associated with the preset condition.

In some implementations, the parameter configuration information associated with the preset condition includes at least one of: a first threshold, a second threshold, a third threshold, a first configuration range, a first timer, a fourth threshold, or a height of a reference point.

In some implementations, the preset condition includes one or more of the following single conditions: a signal measurement result of a serving cell belonging to a value range, a height of the terminal device belonging to a value range, a difference between the height of the terminal device and the height of the reference point belonging to a value range, a configuration corresponding to the serving cell belonging to a configuration range, and a moving speed of the terminal device belonging to a value range.

In some implementations, the first control module 410 is configured to determine the first condition met by the terminal device from multiple pre-configured preset conditions. The first control module 410 is configured to control the measurement reporting behavior of the terminal device by using the parameter associated with the first condition.

In some implementations, the terminal device 500 further includes a second obtaining module 530. The second obtaining module 530 is configured to obtain configuration information related to the preset condition, where the configuration information related to the preset condition includes at least one of: a parameter associated with at least one preset condition, where the parameter is used for controlling the measurement reporting behavior of the terminal device, the type information of the preset condition, or the parameter configuration information associated with the preset condition.

In some implementations, the parameter configuration information associated with the preset condition includes at least one of: at least one value range, a boundary value of the at least one value range, at least one configuration range, or the height of the reference point.

In some implementations, the configuration information related to the preset condition is configured in at least one of the following manners: a pre-configuration manner, a default configuration manner, a system broadcast message configuration manner, or a dedicated signaling configuration manner.

In some implementations, in the case where the preset condition includes multiple single conditions, the terminal device meets at least one of the multiple single conditions in the preset condition, the terminal device meets the preset condition, or when the terminal device meets all of the multiple single conditions in the preset condition, the terminal device meets the preset condition.

In some implementations, the parameter associated with the first condition includes a cell quantity threshold. The first control module 410 is configured to trigger the measurement reporting behavior when the number of cells whose cell measurement results meet a measurement reporting event among cell measurement results at a frequency specified by an MO is greater than or equal to the cell quantity threshold.

In some implementations, the terminal device 500 further includes a first sending module 540. The first sending module 540 is configured to send capability indication information, where the capability indication information indicates whether the terminal device supports determining, according to the preset condition, whether to control the measurement reporting behavior by using the parameter associated with the first condition.

In some implementations, the terminal device 500 further includes a scaling module 550. The scaling module 550 is configured to scale a measurement reporting event control parameter TTT according to at least one of a current height or a current moving speed.

In some implementations, the scaling module 550 is configured to scale the measurement reporting event control parameter TTT according to at least one of the current height or the current moving speed by using a preset correspondence and/or a preset scaling manner.

In some implementations, the preset correspondence and/or the preset scaling manner includes the following. As at least one of the current height or the current moving speed increases, the value of the measurement reporting event control parameter TTT increases. Alternatively, as at least one of the current height or the current moving speed increases, the value of the measurement reporting event control parameter TTT decreases. Alternatively, when the current height is in a first value range and/or the current moving speed is in a second value range, the value of the measurement reporting event control parameter TTT is fixed.

In some implementations, the terminal device 500 further includes a second control module 560. The second control module 560 is configured to start simultaneously a second timer when the terminal device triggers measurement reporting. During the running of the second timer, the second control module 560 is configured to disable triggering of measurement reporting for any frequency, or disable triggering of measurement reporting for a frequency included in an MO associated with the second timer.

In some implementations, the second control module 560 is further configured to operate as follows. In the case where the second timer expires, when a cell measurement result of at least one cell measured at a frequency included in any MO configured by the terminal device meets a measurement reporting event associated with the MO, the second control module 560 is configured to trigger measurement reporting for the frequency included in the MO. Alternatively, in the case where the second timer expires, when a cell measurement result of at least one cell measured at a frequency included in any MO configured by the terminal device meets a measurement reporting event leaving condition associated with the MO, the second control module 560 is configured to trigger measurement reporting for the frequency included in the MO. Alternatively, in the case where the second timer expires, when a cell measurement result of at least one cell measured at the frequency included in the MO associated with the second timer meets a measurement reporting event associated with the MO, the second control module 560 is configured to trigger measurement reporting for the frequency included in the MO associated with the second timer. Alternatively, in the case where the second timer expires, when a cell measurement result of at least one cell measured at the frequency included in the MO associated with the second timer meets a measurement reporting event leaving condition associated with the MO, the second control module 560 is configured to trigger measurement reporting for the frequency included in the MO associated with the second timer.

In some implementations, the second timer is configured in at least one of the following manners: the pre-configuration manner, the default configuration manner, the system broadcast message configuration manner, or the dedicated signaling configuration manner.

The terminal device 400 and the terminal device 500 in embodiments of the present disclosure can implement corresponding functions of the terminal device in the foregoing method embodiments. For the procedure, function, implementation, and advantage corresponding to each module (sub-module, unit, or assembly, etc.) in the terminal device 400 and the terminal device 500, reference can be made to the corresponding illustrations in the foregoing method implementations, which will not be repeated herein. It can be noted that, the functions of various modules (sub-modules, units, or assemblies, etc.) in the terminal device 400 and the terminal device 500 in embodiments of the present disclosure may be implemented by different modules (sub-modules, units, or assemblies, etc.), or may be implemented by the same module (sub-module, unit, or assembly, etc.).

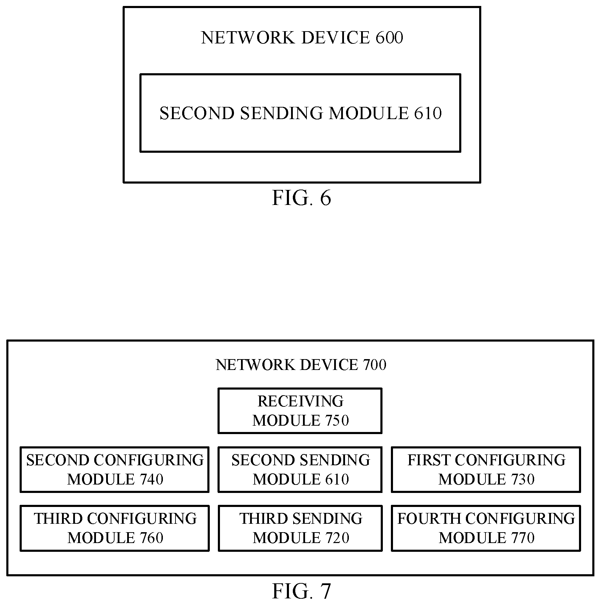

FIG. 6 is a schematic block diagram of a network device 600 according to an embodiment of the present disclosure. The network device 600 can include a second sending module 610. The second sending module 610 is configured to send one or more preset conditions and/or parameters associated with the one or more preset conditions.

In some implementations, the one or more preset conditions and/or the parameters associated with the one or more preset conditions are used for controlling a measurement reporting behavior of the terminal device.

In some implementations, the preset condition includes one or more of the following single conditions: a signal measurement result of a serving cell being greater than or equal to a first threshold, a height of the terminal device being greater than or equal to a second threshold, a difference between the height of the terminal device and a height of a reference point being greater than or equal to a third threshold, a configuration corresponding to the serving cell belonging to a first configuration range, the terminal device being during running of a first timer, and a moving speed of the terminal device being less than or equal to a fourth threshold.

FIG. 7 is a schematic block diagram of a network device 700 according to an embodiment of the present disclosure. The network device 700 includes one or more features of the network device 600 in the above embodiment. In a possible implementation, in embodiments of the present disclosure, the network device 700 further includes a third sending module 720. The third sending module 720 is configured to send enable indication information to the terminal device, where the enable indication information indicates whether it is enabled to determine, according to the preset condition, whether to control a measurement reporting behavior of the terminal device by using a parameter associated with a first condition.

In some implementations, the network device 700 further includes a first configuring module 730. The first configuring module 730 is configured to configure configuration information related to the preset condition for the terminal device, where the configuration information related to the preset condition includes: type information of the preset condition, and/or parameter configuration information associated with the preset condition.

In some implementations, the parameter configuration information associated with the preset condition includes at least one of: a first threshold, a second threshold, a third threshold, a first configuration range, a first timer, a fourth threshold, or a height of a reference point.

In some implementations, the preset condition includes one or more of the following single conditions: a signal measurement result of a serving cell belonging to a value range, a height of the terminal device belonging to a value range, a difference between the height of the terminal device and the height of the reference point belonging to a value range, a configuration corresponding to the serving cell belonging to a configuration range, and a moving speed of the terminal device belonging to a value range.

In some implementations, the network device 700 further includes a second configuring module 740. The second configuring module 740 is configured to configure configuration information related to the preset condition for the terminal device, where the configuration information related to the preset condition includes at least one of: a parameter associated with at least one preset condition, where the parameter is used for controlling a measurement reporting behavior of the terminal device, the type information of the preset condition, or the parameter configuration information associated with the preset condition.

In some implementations, the parameter configuration information associated with the preset condition includes at least one of: at least one value range, a boundary value of the at least one value range, at least one configuration range, or the height of the reference point.

In some implementations, the configuration information related to the preset condition is configured in at least one of the following manners: a pre-configuration manner, a default configuration manner, a system broadcast message configuration manner, or a dedicated signaling configuration manner.

In some implementations, in the case where the preset condition includes multiple single conditions, when the terminal device meets at least one of the multiple single conditions in the preset condition, the terminal device meets the preset condition, or when the terminal device meets all of the multiple single conditions in the preset condition, the terminal device meets the preset condition.

In some implementations, the parameter associated with the first condition includes a cell quantity threshold.

In some implementations, the network device 700 further includes a receiving module 750. The receiving module 750 is configured to receive capability indication information from the terminal device, where the capability indication information indicates whether the terminal device supports determining, according to the preset condition, whether to control a measurement reporting behavior by using the parameter associated with the first condition.

In some implementations, the network device 700 further includes a third configuring module 760. The third configuring module 760 is configured to configure a scaling parameter for the terminal device, where the scaling parameter is used for scaling a measurement reporting event control parameter TTT.

In some implementations, the network device 700 further includes a fourth configuring module 770. The fourth configuring module 770 is configured to configure a second timer for the terminal device in at least one of the following manners: the pre-configuration manner, the default configuration manner, the system broadcast message configuration manner, or the dedicated signaling configuration manner.

The network device 600 and the network device 700 in embodiments of the present disclosure can implement corresponding functions of the network device in the foregoing method embodiments. For the procedure, function, implementation, and advantage corresponding to each module (sub-module, unit, or assembly, etc.) in the network device 600 and the network device 700, reference can be made to the corresponding illustrations in the foregoing method implementations, which will not be repeated herein. It can be noted that, the functions of various modules (sub-modules, units, or assemblies, etc.) in the network device 600 and the network device 700 in embodiments of the present disclosure may be implemented by different modules (sub-modules, units, or assemblies, etc.), or may be implemented by the same module (sub-module, unit, or assembly, etc.).

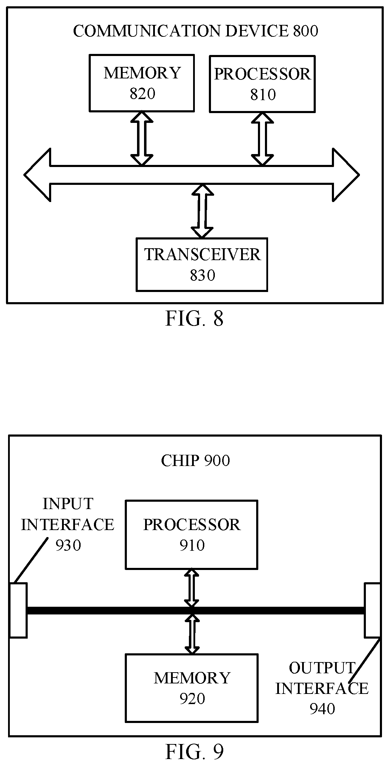

FIG. 8 is a schematic structural diagram of a communication device 800 according to embodiments of the present disclosure. The communication device 800 includes a processor 810. The processor 810 can invoke and execute a computer program stored in a memory, to cause the communication device 800 to implement the method in embodiments of the present disclosure.

In an implementation, the communication device 800 can further include a memory 820. The processor 810 can invoke and execute a computer program stored in the memory 820, to cause the communication device 800 to implement the method in embodiments of the present disclosure.

The memory 820 can be a separate device independent of the processor 810, or can be integrated into the processor 810.

In an implementation, the communication device 800 may further include a transceiver 830. The processor 810 can control the transceiver 830 to communicate with other devices, and specifically, to send information or data to other devices or receive information or data sent by other devices.

The transceiver 830 may include a transmitter and a receiver. The transceiver 830 can further include an antenna, where one or more antennas may be provided.

In an implementation, the communication device 800 can be the network device in embodiments of the present disclosure, and the communication device 800 can implement corresponding operations implemented by the network device in various methods in embodiments of the present disclosure, which is not repeated herein for the sake of brevity.

In a possible implementation, the communication device 800 can be an internet of things (IOT) device in embodiments of the present disclosure, and the communication device 800 can implement corresponding operations implemented by the IOT device in various methods in embodiments of the present disclosure, which is not repeated herein for the sake of brevity.

FIG. 9 is a schematic structural diagram of a chip 900 according to embodiments of the present disclosure. The chip 900 includes a processor 910. The processor 910 can invoke and execute a computer program stored in a memory, to implement the method in embodiments of the present disclosure.

In an implementation, the chip 900 can further include a memory 920. The processor 910 can invoke and execute a computer program stored in the memory 920, to implement the method implemented by the IOT device and the network device in embodiments of the present disclosure.

The memory 920 can be a separate device independent of the processor 910, or can be integrated into the processor 910.

In an implementation, the chip 900 can further include an input interface 930. The processor 910 can control the input interface 930 to communicate with other devices or chips, and specifically, to obtain information or data sent by other devices or chips.

In an implementation, the chip 900 can further include an output interface 940. The processor 910 can control the output interface 940 to communicate with other devices or chips, and specifically, to output information or data to other devices or chips.

In an implementation, the chip can be applied to the network device in embodiments of the present disclosure, and the chip can implement corresponding operations implemented by the network device in various methods in embodiments of the present disclosure, which is not repeated herein for the sake of brevity.

In an implementation, the chip can be applied to the IOT device in embodiments of the present disclosure, and the chip can implement corresponding operations implemented by the IOT device in various methods in embodiments of the present disclosure, which is not repeated herein for the sake of brevity.

The chip applied to the network device and the chip applied to the IOT device can be the same as or different from each other.

It can be understood that the chip mentioned in embodiments of the present disclosure can also be referred to as a system-on-chip (SOC).

The processor can be a general-purpose processor, a digital signal processor (DSP), an application-specific integrated circuit (ASIC), a field programmable gate array (FPGA), or other programmable logic devices, discrete gates or transistor logic devices, discrete hardware components. The general-purpose processor can be a microprocessor, any conventional processor, etc.

The memory can be a volatile memory or a non-volatile memory, or can include both the volatile memory and the non-volatile memory. The non-volatile memory can be a read-only memory (ROM), a programmable ROM (PROM), an erasable PROM (EPROM), an electrically EPROM (EEPROM), or a flash memory. The volatile memory can be a random access memory (RAM).

It can be understood that the memory above is intended for illustration rather than limitation. For example, the memory in embodiments of the present disclosure can also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the present disclosure is intended to include, but is not limited to, these and any other suitable types of memory.

All or some of the above implementations can be implemented through software, hardware, firmware, or any other combination thereof. When implemented by software, all or some of the above implementations can be implemented in the form of a computer program product. The computer program product includes one or more computer instructions. When the computer instructions are applied and executed on a computer, all or some of the operations or functions of the embodiments of the present disclosure are performed. The computer can be a general-purpose computer, a special-purpose computer, a computer network, or other programmable apparatuses. The computer instruction can be stored in a computer-readable storage medium, or sent from one computer-readable storage medium to another computer-readable storage medium. For example, the computer instruction can be sent from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer-accessible usable medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It can be understood that, in various embodiments of the present disclosure, the magnitude of a sequence number of each process does not mean an order of execution, and the order of execution of each process can be determined by its function and internal logic and shall not constitute any limitation to the implementation of the embodiments of the present disclosure.

It will be evident to those skilled in the art that, for the sake of convenience and simplicity, in terms of the specific working processes of the foregoing systems, apparatuses, and units, reference can be made to the corresponding processes in the foregoing method implementations, which is not repeated herein.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for measurement reporting, comprising:
controlling, by a terminal device, a measurement reporting behavior of the terminal device by using a parameter associated with a first condition, wherein the first condition is a preset condition met by the terminal device.

2. The method of claim 1, wherein the preset condition met by the terminal device is determined by the terminal device according to at least one of a signal measurement result of a serving cell, a height of the terminal device, a configuration corresponding to the serving cell, a first timer, or a moving speed of the terminal device.

3. The method of claim 1 or 2, wherein the preset condition comprises one or more of the following single conditions:
a signal measurement result of a serving cell being greater than or equal to a first threshold;
a height of the terminal device being greater than or equal to a second threshold;
a difference between the height of the terminal device and a height of a reference point being greater than or equal to a third threshold;
a configuration corresponding to the serving cell belonging to a first configuration range;
the terminal device being during running of a first timer; and
a moving speed of the terminal device being less than or equal to a fourth threshold.

4. The method of any one of claims 1 to 3, wherein controlling, by the terminal device, the measurement reporting behavior of the terminal device by using the parameter associated with the first condition comprises:
receiving, by the terminal device, enable indication information; and
in a case where the enable indication information indicates that it is enabled to determine, according to the preset condition, whether to control the measurement reporting behavior of the terminal device by using the parameter associated with the first condition,
in response to the terminal device meeting the preset condition, controlling the measurement reporting behavior of the terminal device by using the parameter associated with the first condition; and
in response to the terminal device failing to meet the preset condition, controlling the measurement reporting behavior of the terminal device without using the parameter associated with the first condition, or controlling the measurement reporting behavior of the terminal device by using a protocol default parameter.

5. The method of claim 4, wherein after receiving, by the terminal device, the enable indication information, the method further comprises:
in a case where the enable indication information indicates that it is disabled to determine, according to the preset condition, whether to control the measurement reporting behavior of the terminal device by using the parameter associated with the first condition, controlling, by the terminal device, the measurement reporting behavior of the terminal device by using the parameter associated with the first condition.

6. The method of any one of claims 3 to 5, further comprising:
obtaining, by the terminal device, configuration information related to the preset condition, wherein the configuration information related to the preset condition comprises:
type information of the preset condition; and/or
parameter configuration information associated with the preset condition.

7. The method of claim 6, wherein the parameter configuration information associated with the preset condition comprises at least one of: a first threshold, a second threshold, a third threshold, a first configuration range, a first timer, a fourth threshold, or a height of a reference point.

8. The method of claim 1 or 2, wherein the preset condition comprises one or more of the following single conditions:
a signal measurement result of a serving cell belonging to a value range;
a height of the terminal device belonging to a value range;
a difference between the height of the terminal device and a height of a reference point belonging to a value range;
a configuration corresponding to the serving cell belonging to a configuration range; and
a moving speed of the terminal device belonging to a value range.

9. The method of claim 8, wherein controlling, by the terminal device, the measurement reporting behavior of the terminal device by using the parameter associated with the first condition comprises:
determining, by the terminal device, the first condition met by the terminal device from a plurality of pre-configured preset conditions; and
controlling, by the terminal device, the measurement reporting behavior of the terminal device by using the parameter associated with the first condition.

10. The method of claim 8 or 9, further comprising:
obtaining, by the terminal device, configuration information related to the preset condition, wherein the configuration information related to the preset condition comprises at least one of:
a parameter associated with at least one preset condition, wherein the parameter is used for controlling the measurement reporting behavior of the terminal device;
type information of the preset condition; or
parameter configuration information associated with the preset condition.

11. The method of claim 10, wherein the parameter configuration information associated with the preset condition comprises at least one of: at least one value range, a boundary value of the at least one value range, at least one configuration range, or the height of the reference point.

12. The method of claim 6, 7, 10, or 11, wherein the configuration information related to the preset condition is configured in at least one of the following manners:
a pre-configuration manner, a default configuration manner, a system broadcast message configuration manner, or a dedicated signaling configuration manner.

13. The method of any one of claims 3 to 12, wherein in a case where the preset condition comprises a plurality of single conditions,
in response to the terminal device meeting at least one of the plurality of single conditions in the preset condition, the terminal device meets the preset condition; or
in response to the terminal device meeting all of the plurality of single conditions in the preset condition, the terminal device meets the preset condition.

14. The method of any one of claims 1 to 13, wherein
the parameter associated with the first condition comprises a cell quantity threshold; and
controlling, by the terminal device, the measurement reporting behavior of the terminal device by using the parameter associated with the first condition comprises:
in a case where a number of cells whose cell measurement results meet a measurement reporting event among cell measurement results at a frequency specified by a measurement object (MO) is greater than or equal to the cell quantity threshold, triggering the measurement reporting behavior.

15. The method of any one of claims 1 to 14, further comprising:
sending, by the terminal device, capability indication information, wherein the capability indication information indicates whether the terminal device supports determining, according to the preset condition, whether to control the measurement reporting behavior by using the parameter associated with the first condition.

16. The method of any one of claims 1 to 15, further comprising:
scaling, by the terminal device, a measurement reporting event control parameter time to trigger (TTT) according to at least one of a current height or a current moving speed.

17. The method of claim 16, wherein scaling, by the terminal device, the measurement reporting event control parameter TTT according to at least one of the current height or the current moving speed comprises:
scaling, by the terminal device, the measurement reporting event control parameter TTT according to at least one of the current height or the current moving speed by using a preset correspondence and/or a preset scaling manner.

18. The method of claim 17, wherein the preset correspondence and/or the preset scaling manner comprise:
a value of the measurement reporting event control parameter TTT increasing as at least one of the current height or the current moving speed increases; or
the value of the measurement reporting event control parameter TTT decreasing as at least one of the current height or the current moving speed increases; or
the value of the measurement reporting event control parameter TTT being fixed in response to the current height being in a first value range and/or the current moving speed being in a second value range.

19. The method of any one of claims 1 to 18, further comprising:
in response to the terminal device triggering measurement reporting, starting simultaneously, by the terminal device, a second timer; and
during running of the second timer, disabling, by the terminal device, triggering of measurement reporting for any frequency, or disabling, by the terminal device, triggering of measurement reporting for a frequency comprised in an MO associated with the second timer.

20. The method of claim 19, further comprising:
in a case where the second timer expires, in response to a cell measurement result of at least one cell measured at a frequency comprised in any MO configured by the terminal device meeting a measurement reporting event associated with the MO, triggering, by the terminal device, measurement reporting for the frequency comprised in the MO; or
in the case where the second timer expires, in response to a cell measurement result of at least one cell measured at a frequency comprised in any MO configured by the terminal device meeting a measurement reporting event leaving condition associated with the MO, triggering, by the terminal device, measurement reporting for the frequency comprised in the MO; or
in the case where the second timer expires, in response to a cell measurement result of at least one cell measured at the frequency comprised in the MO associated with the second timer meeting a measurement reporting event associated with the MO, triggering, by the terminal device, measurement reporting for the frequency comprised in the MO associated with the second timer; or
in the case where the second timer expires, in response to a cell measurement result of at least one cell measured at the frequency comprised in the MO associated with the second timer meeting a measurement reporting event leaving condition associated with the MO, triggering, by the terminal device, measurement reporting for the frequency comprised in the MO associated with the second timer.

21. The method of claim 19 or 20, wherein the second timer is configured in at least one of the following manners:
a pre-configuration manner, a default configuration manner, a system broadcast message configuration manner, or a dedicated signaling configuration manner.

22. A method for measurement reporting management, comprising:
sending, by a network device, one or more preset conditions and/or parameters associated with the one or more preset conditions to a terminal device.

23. The method of claim 22, wherein the one or more preset conditions and/or the parameters associated with the one or more preset conditions are used for controlling a measurement reporting behavior of the terminal device.

24. The method of claim 22 or 23, wherein the preset condition comprises one or more of the following single conditions:
a signal measurement result of a serving cell being greater than or equal to a first threshold;
a height of the terminal device being greater than or equal to a second threshold;
a difference between the height of the terminal device and a height of a reference point being greater than or equal to a third threshold;
a configuration corresponding to the serving cell belonging to a first configuration range;
the terminal device being during running of a first timer; and
a moving speed of the terminal device being less than or equal to a fourth threshold.

25. The method of any one of claims 22 to 24, further comprising:
sending, by the network device, enable indication information to the terminal device, wherein the enable indication information indicates whether it is enabled to determine, according to the preset condition, whether to control a measurement reporting behavior of the terminal device by using a parameter associated with a first condition.

26. The method of any one of claims 22 to 25, further comprising:
configuring, by the network device, configuration information related to the preset condition for the terminal device, wherein the configuration information related to the preset condition comprises:
type information of the preset condition; and/or
parameter configuration information associated with the preset condition.

27. The method of claim 26, wherein the parameter configuration information associated with the preset condition comprises at least one of: a first threshold, a second threshold, a third threshold, a first configuration range, a first timer, a fourth threshold, or a height of a reference point.

28. The method of claim 22 or 23, wherein the preset condition comprises one or more of the following single conditions:
a signal measurement result of a serving cell belonging to a value range;
a height of the terminal device belonging to a value range;
a difference between the height of the terminal device and a height of a reference point belonging to a value range;
a configuration corresponding to the serving cell belonging to a configuration range; and
a moving speed of the terminal device belonging to a value range.

29. The method of claim 28, further comprising:
configuring, by the network device, configuration information related to the preset condition for the terminal device, wherein the configuration information related to the preset condition comprises at least one of:
a parameter associated with at least one preset condition, wherein the parameter is used for controlling a measurement reporting behavior of the terminal device;
type information of the preset condition; or
parameter configuration information associated with the preset condition.

30. The method of claim 29, wherein the parameter configuration information associated with the preset condition comprises at least one of: at least one value range, a boundary value of the at least one value range, at least one configuration range, or the height of the reference point.

31. The method of claim 26, 27, 29, or 30, wherein the configuration information related to the preset condition is configured in at least one of the following manners:
a pre-configuration manner, a default configuration manner, a system broadcast message configuration manner, or a dedicated signaling configuration manner.

32. The method of any one of claims 24 to 31, wherein in a case where the preset condition comprises a plurality of single conditions,
in response to the terminal device meeting at least one of the plurality of single conditions in the preset condition, the terminal device meets the preset condition; or
in response to the terminal device meeting all of the plurality of single conditions in the preset condition, the terminal device meets the preset condition.

33. The method of any one of claims 22 to 32, wherein a parameter associated with a first condition comprises a cell quantity threshold.

34. The method of any one of claims 22 to 33, further comprising:
receiving, by the network device, capability indication information from the terminal device, wherein the capability indication information indicates whether the terminal device supports determining, according to the preset condition, whether to control a measurement reporting behavior by using a parameter associated with a first condition.

35. The method of any one of claims 22 to 34, further comprising:
configuring, by the network device, a scaling parameter for the terminal device, wherein the scaling parameter is used for scaling a measurement reporting event control parameter time to trigger (TTT).

36. The method of any one of claims 22 to 35, further comprising:
configuring, by the network device, a second timer for the terminal device in at least one of the following manners: a pre-configuration manner, a default configuration manner, a system broadcast message configuration manner, or a dedicated signaling configuration manner.

37. A terminal device, comprising:
a first control module configured to control a measurement reporting behavior of the terminal device by using a parameter associated with a first condition, wherein the first condition is a preset condition met by the terminal device.

38. The terminal device of claim 37, wherein the preset condition met by the terminal device is determined by the first control module according to at least one of a signal measurement result of a serving cell, a height of the terminal device, a configuration corresponding to the serving cell, a first timer, or a moving speed of the terminal device.

39. The terminal device of claim 37 or 38, wherein the preset condition comprises one or more of the following single conditions:
a signal measurement result of a serving cell being greater than or equal to a first threshold;
a height of the terminal device being greater than or equal to a second threshold;
a difference between the height of the terminal device and a height of a reference point being greater than or equal to a third threshold;
a configuration corresponding to the serving cell belonging to a first configuration range;
the terminal device being during running of a first timer; and
a moving speed of the terminal device being less than or equal to a fourth threshold.

40. The terminal device of any one of claims 37 to 39, wherein the first control module is configured to:
receive enable indication information; and
in a case where the enable indication information indicates that it is enabled to determine, according to the preset condition, whether to control the measurement reporting behavior of the terminal device by using the parameter associated with the first condition,
in response to the terminal device meeting the preset condition, control the measurement reporting behavior of the terminal device by using the parameter associated with the first condition; and
in response to the terminal device failing to meet the preset condition, control the measurement reporting behavior of the terminal device without using the parameter associated with the first condition, or control the measurement reporting behavior of the terminal device by using a protocol default parameter.

41. The terminal device of claim 40, wherein the first control module is further configured to:
in a case where the enable indication information indicates that it is disabled to determine, according to the preset condition, whether to control the measurement reporting behavior of the terminal device by using the parameter associated with the first condition, control, by the terminal device, the measurement reporting behavior of the terminal device by using the parameter associated with the first condition.

42. The terminal device of any one of claims 39 to 41, further comprising:
a first obtaining module configured to obtain configuration information related to the preset condition, wherein the configuration information related to the preset condition comprises:
type information of the preset condition; and/or
parameter configuration information associated with the preset condition.

43. The terminal device of claim 42, wherein the parameter configuration information associated with the preset condition comprises at least one of: a first threshold, a second threshold, a third threshold, a first configuration range, a first timer, a fourth threshold, or a height of a reference point.

44. The terminal device of claim 37 or 38, wherein the preset condition comprises one or more of the following single conditions:
a signal measurement result of a serving cell belonging to a value range;
a height of the terminal device belonging to a value range;
a difference between the height of the terminal device and a height of a reference point belonging to a value range;
a configuration corresponding to the serving cell belonging to a configuration range; and
a moving speed of the terminal device belonging to a value range.

45. The terminal device of claim 44, wherein the first control module is configured to:
determine the first condition met by the terminal device from a plurality of pre-configured preset conditions; and
control the measurement reporting behavior of the terminal device by using the parameter associated with the first condition.

46. The terminal device of claim 44 or 45, further comprising:
a second obtaining module configured to obtain configuration information related to the preset condition, wherein the configuration information related to the preset condition comprises at least one of:
a parameter associated with at least one preset condition, wherein the parameter is used for controlling the measurement reporting behavior of the terminal device;
type information of the preset condition; or
parameter configuration information associated with the preset condition.

47. The terminal device of claim 46, wherein the parameter configuration information associated with the preset condition comprises at least one of: at least one value range, a boundary value of the at least one value range, at least one configuration range, or the height of the reference point.

48. The terminal device of claim 42, 43, 46, or 47, wherein the configuration information related to the preset condition is configured in at least one of the following manners:
a pre-configuration manner, a default configuration manner, a system broadcast message configuration manner, or a dedicated signaling configuration manner.

49. The terminal device of any one of claims 39 to 48, wherein in a case where the preset condition comprises a plurality of single conditions,
in response to the terminal device meeting at least one of the plurality of single conditions in the preset condition, the terminal device meets the preset condition; or
in response to the terminal device meeting all of the plurality of single conditions in the preset condition, the terminal device meets the preset condition.

50. The terminal device of any one of claims 37 to 49, wherein
the parameter associated with the first condition comprises a cell quantity threshold; and
the first control module is configured to trigger the measurement reporting behavior in a case where a number of cells whose cell measurement results meet a measurement reporting event among cell measurement results at a frequency specified by a measurement object (MO) is greater than or equal to the cell quantity threshold.

51. The terminal device of any one of claims 37 to 50, further comprising:
a first sending module configured to send capability indication information, wherein the capability indication information indicates whether the terminal device supports determining, according to the preset condition, whether to control the measurement reporting behavior by using the parameter associated with the first condition.

52. The terminal device of any one of claims 37 to 51, further comprising:
a scaling module configured to scale a measurement reporting event control parameter time to trigger (TTT) according to at least one of a current height or a current moving speed.

53. The terminal device of claim 52, wherein the scaling module is configured to scale the measurement reporting event control parameter TTT according to at least one of the current height or the current moving speed by using a preset correspondence and/or a preset scaling manner.

54. The terminal device of claim 53, wherein the preset correspondence and/or the preset scaling manner comprise:
a value of the measurement reporting event control parameter TTT increasing as at least one of the current height or the current moving speed increases; or
the value of the measurement reporting event control parameter TTT decreasing as at least one of the current height or the current moving speed increases; or
the value of the measurement reporting event control parameter TTT being fixed in response to the current height being in a first value range and/or the current moving speed being in a second value range.

55. The terminal device of any one of claims 37 to 54, further comprising:
a second control module configured to:
in response to the terminal device triggering measurement reporting, start simultaneously a second timer; and
during running of the second timer, disable triggering of measurement reporting for any frequency, or disable triggering of measurement reporting for a frequency comprised in an MO associated with the second timer.

56. The terminal device of claim 55, wherein the second control module is further configured to:
in a case where the second timer expires, in response to a cell measurement result of at least one cell measured at a frequency comprised in any MO configured by the terminal device meeting a measurement reporting event associated with the MO, trigger measurement reporting for the frequency comprised in the MO; or
in the case where the second timer expires, in response to a cell measurement result of at least one cell measured at a frequency comprised in any MO configured by the terminal device meeting a measurement reporting event leaving condition associated with the MO, trigger measurement reporting for the frequency comprised in the MO; or
in the case where the second timer expires, in response to a cell measurement result of at least one cell measured at the frequency comprised in the MO associated with the second timer meeting a measurement reporting event associated with the MO, trigger measurement reporting for the frequency comprised in the MO associated with the second timer; or
in the case where the second timer expires, in response to a cell measurement result of at least one cell measured at the frequency comprised in the MO associated with the second timer meeting a measurement reporting event leaving condition associated with the MO, trigger measurement reporting for the frequency comprised in the MO associated with the second timer.

57. The terminal device of claim 55 or 56, wherein the second timer is configured in at least one of the following manners:
a pre-configuration manner, a default configuration manner, a system broadcast message configuration manner, or a dedicated signaling configuration manner.

58. A network device comprising:
a second sending module configured to send one or more preset conditions and/or parameters associated with the one or more preset conditions.

59. The network device of claim 58, wherein the one or more preset conditions and/or the parameters associated with the one or more preset conditions are used for controlling a measurement reporting behavior of the terminal device.

60. The network device of claim 58 or 59, wherein the preset condition comprises one or more of the following single conditions:
a signal measurement result of a serving cell being greater than or equal to a first threshold;
a height of the terminal device being greater than or equal to a second threshold;
a difference between the height of the terminal device and a height of a reference point being greater than or equal to a third threshold;
a configuration corresponding to the serving cell belonging to a first configuration range;
the terminal device being during running of a first timer; and
a moving speed of the terminal device being less than or equal to a fourth threshold.

61. The network device of any one of claims 58 to 60, further comprising:
a third sending module configured to send enable indication information to the terminal device, wherein the enable indication information indicates whether it is enabled to determine, according to the preset condition, whether to control a measurement reporting behavior of the terminal device by using a parameter associated with a first condition.

62. The network device of claim 60 or 61, further comprising:
a first configuring module configured to configure configuration information related to the preset condition for the terminal device, wherein the configuration information related to the preset condition comprises:
type information of the preset condition; and/or
parameter configuration information associated with the preset condition.

63. The network device of claim 62, wherein the parameter configuration information associated with the preset condition comprises at least one of: a first threshold, a second threshold, a third threshold, a first configuration range, a first timer, a fourth threshold, or a height of a reference point.

64. The network device of claim 58 or 59, wherein the preset condition comprises one or more of the following single conditions:
a signal measurement result of a serving cell belonging to a value range;
a height of the terminal device belonging to a value range;
a difference between the height of the terminal device and a height of a reference point belonging to a value range;
a configuration corresponding to the serving cell belonging to a configuration range; and
a moving speed of the terminal device belonging to a value range.

65. The network device of claim 64, further comprising:
a second configuring module configured to configure configuration information related to the preset condition for the terminal device, wherein the configuration information related to the preset condition comprises at least one of:
a parameter associated with at least one preset condition, wherein the parameter is used for controlling a measurement reporting behavior of the terminal device;
type information of the preset condition; or
parameter configuration information associated with the preset condition.

66. The network device of claim 65, wherein the parameter configuration information associated with the preset condition comprises at least one of: at least one value range, a boundary value of the at least one value range, at least one configuration range, or the height of the reference point.

67. The network device of claim 62, 63, 65, or 66, wherein the configuration information related to the preset condition is configured in at least one of the following manners:
a pre-configuration manner, a default configuration manner, a system broadcast message configuration manner, or a dedicated signaling configuration manner.

68. The network device of any one of claims 60 to 67, wherein in a case where the preset condition comprises a plurality of single conditions,
in response to the terminal device meeting at least one of the plurality of single conditions in the preset condition, the terminal device meets the preset condition; or
in response to the terminal device meeting all of the plurality of single conditions in the preset condition, the terminal device meets the preset condition.

69. The network device of any one of claims 58 to 68, wherein a parameter associated with a first condition comprises a cell quantity threshold.

70. The network device of any one of claims 58 to 69, further comprising:
a receiving module configured to receive capability indication information from the terminal device, wherein the capability indication information indicates whether the terminal device supports determining, according to the preset condition, whether to control a measurement reporting behavior by using a parameter associated with a first condition.

71. The network device of any one of claims 58 to 70, further comprising:
a third configuring module configured to configure a scaling parameter for the terminal device, wherein the scaling parameter is used for scaling a measurement reporting event control parameter time to trigger (TTT).

72. The network device of any one of claims 58 to 71, further comprising:
a fourth configuring module configured to configure a second timer for the terminal device in at least one of the following manners: a pre-configuration manner, a default configuration manner, a system broadcast message configuration manner, or a dedicated signaling configuration manner.

73. A device, comprising:
a transceiver;
a memory configured to store a computer program; and
a processor configured to invoke and execute the computer program stored in the memory and to control the transceiver, to cause a network device to perform the method of any one of claims 1 to 21 or claims 22 to 36.

74. A chip, comprising:
a processor configured to invoke and execute a computer program stored in a memory, to cause a device equipped with the chip to perform the method of any one of claims 1 to 21 or claims 22 to 36.

75. A computer-readable storage medium configured to store a computer program which, when executed by a device, causes the device to perform the method of any one of claims 1 to 21 or claims 22 to 36.

76. A computer program product comprising computer program instructions that are operable with a computer to perform the method of any one of claims 1 to 21 or claims 22 to 36.

77. A computer program being operable with a computer to perform the method of any one of claims 1 to 21 or claims 22 to 36.
